# EUROPÄISCHE PATENTSCHRIFT

(11) **EP 2 699 404 B1**
(45) Veröffentlichungstag und Bekanntmachung des Hinweises auf die Patenterteilung: **07.06.2023**
(21) Anmeldenummer: 12720125.9
(22) Anmeldetag: 18.04.2012
(51) Int. Cl.: B29C 48/87, B29C 48/90, B29C 48/92, B29C 48/12, B29C 48/11

(54) **EXTRUSIONSVORRICHTUNG UND VERFAHREN ZUR BEEINFLUSSUNG VON WANDDICKEN EINES EXTRUDIERTEN KUNSTSTOFFPROFILS**
EXTRUSION DEVICE AND METHOD FOR INFLUENCING WALL THICKNESSES OF AN EXTRUDED PLASTIC PROFILE
DISPOSITIF D'EXTRUSION ET PROCÉDÉ POUR INFLUENCER L'ÉPAISSEUR DE PAROI D'UN PROFILÉ EN PLASTIQUE EXTRUDÉ

(30) Priorität: 18.04.2011 DE 102011007618
(43) Veröffentlichungstag der Anmeldung: 26.02.2014
(73) Patentinhaber: Greiner Extrusion Group GmbH, 4550 Kremsmünster (AT)
(72) Erfinder: KRUMBÖCK, Erwin, A-4052 Ansfelden (AT); WEIERMAYER, Leopold, A-4552 Wartberg/Krems (AT); GEBESMAIER, Karl, A-4560 Kirchdorf/Krems (AT)
(74) Vertreter: Maikowski & Ninnemann Patentanwälte Partnerschaft mbB
(86) Internationale Anmeldenummer: PCT/EP2012/057045
(87) Internationale Veröffentlichungsnummer: WO 2012/143373

(56) Entgegenhaltungen:
- EP-A2- 1 023 983
- WO-A2-2006/050549
- WO-A2-2006/096898
- WO-A2-2009/003662
- DE-A1- 2 123 333
- DE-A1- 2 232 930
- DE-A1- 2 234 876
- DE-A1- 3 503 721
- DE-A1- 19 823 304
- DE-A1- 19 825 892
- DE-U1- 29 912 972
- FR-A- 942 297
- GB-A- 2 324 756
- JP-A- 2000 158 514
- JP-A- 2003 305 763
- US-A- 4 100 243
- US-A- 4 548 570

## Beschreibung

Die Erfindung betrifft eine Extrusionsvorrichtung zur Beeinflussung der Wanddicke eines extrudierten Kunststoffprofils und ein Verfahren zur Beeinflussung der Wanddicke eines extrudierten Kunststoffprofils.

Kunststoffprofile werden häufig durch Extrudieren erzeugt. In einem Extruder wird eine weitgehend homogene Kunststoffschmelze aufbereitet und auf einen Druck von etwa 200 bis 400 bar und eine Temperatur von etwa 200°C gebracht. Die Kunststoffschmelze wird mit hohem Druck durch eine Extrusionsdüse gepresst. Der Ausgang der Extrusionsdüse weist annähernd die Kontur des gewünschten Kunststoffprofils auf.

Nach dem Austritt der Kunststoffschmelze aus der Extrusionsdüse gelangt das extrudierte Kunststoffprofil, z.B. in Form eines Schmelzestranges in eine Kalibrierungsvorrichtung, um in dieser unter Beibehaltung der Profilkontur abgekühlt zu werden. Kalibrierungsvorrichtungen für die Herstellung vergleichsweise komplizierter Kunststoffprofile, wie z.B. Fensterprofile als Hohlprofile, weisen üblicherweise einen Trockenkalibrierungsbereich und einen anschließenden Nasskalibrierungsbereich auf.

Die Wanddicken des Kunststoffprofils werden dabei weitgehend in der Düse festgelegt.

Eine Änderung von Wanddicken in der Kalibrierung ist kaum möglich. Bei Hohlkammerprofilen wird die betreffende Außenwand an die Kalibrierung angesaugt und dann vorwiegend über Wärmeableitung abgekühlt. Auf die Innenseite dieser Außenwand (d.h. im Inneren des Kunststoffprofils) kann kein Einfluss, welcher zu einer Wanddickenänderung führen könnte, ausgeübt werden.

Bei vom Kunststoffprofil abstehenden, z.B. einwandigen Profilsektionen, wie z.B. Haken oder Nasen, könnte in der Kalibrierung beidseitig eine Druckkraft ausgeübt werden, welche Material seitlich verdrängen würde und somit zu einer geringeren Wanddicke führen würde. Praktisch ist das aber nur in einem sehr kleinen Umfang möglich, weil eine hierfür erforderliche Klemmkraft unweigerlich zu einer Reibkraft führt, welche von der noch weichen, zähflüssigen Kunststoffmasse nicht übertragen werden kann. Die betroffene Profilsektion würde im zu engen Spalt steckenbleiben und zu einem Abreißen des Profilstranges führen.

Der Spalt bzw. die Kontur in der Kalibrierung muss daher für die Ausformung von einwandigen Bereichen immer größer sein als die betreffende Wanddicke bzw. Kontur des Kunststoffprofils, um zuverlässig ein Hängenbleiben des extrudierten Kunststoffprofils in der Kalibrierung zu vermeiden, auch wenn infolge geringfügiger, unvermeidbarer Schwankungen des Durchsatzes aus dem Extruder entsprechende Wanddickenschwankungen auf das Kunststoffprofil übertragen werden. Es ist daher üblich, den Spalt in der Kalibrierung um 0,1 bis 0,3 mm, insbesondere 0,2 mm größer, auszuführen als es der Wanddicke des Profils entspricht.

Bei der Herstellung von Extrusionsvorrichtungen ist ein erheblicher Fertigungsaufwand in der Extrusionsdüse erforderlich, um die Wanddicken in allen Profilsektionen des extrudierten Kunststoffprofils sicherstellen zu können. Dieser Aufwand betrifft Änderungen der Spaltweiten in den Fließkanälen der Extrusionsdüse entlang des Fließweges.

Die Wanddicken der Kunststoffprofile sind nur so weit reproduzierbar, so lange sich die Extrusionsbedingungen nicht ändern. Die Extrusionsbedingungen betreffen alle Parameter im Extruder (Extrudertyp und -größe, Temperaturverlauf im Zylinder, Drehzahl der Schnecken, Durchsatz u.a.) sowie des Materials (Rezeptur, Mischbedingungen, Feuchtegehalt u.a.). Jede Änderung der genannten Parameter kann eine Änderung von Wanddicken an bestimmten Sektionen des Profils mit sich ziehen, d.h. es wird nicht das gesamte Kunststoffprofil tendenziell dicker oder dünner, sondern die Auswirkungen sind bereichsweise unterschiedlich.

Eine Forderung aus wirtschaftlicher Sicht ist es, Kunststoffprofile mit möglichst niedrigem Metergewicht zu produzieren und gleichzeitig alle Qualitätserfordernisse (Geometrie, Mindestwanddicken, mechanische Festigkeit, Glanz u.a.) zu erfüllen. Es ist beispielsweise nicht möglich, Außenwände bereichsweise dünner auszuführen, als in einschlägigen Normen festgelegt ist. Es müssen die unvermeidbaren Wechselwirkungen bei der herkömmlichen Extrusion betrachtet werden: Wird ein Profil nahe beim minimalen Metergewicht mit guter Qualität produziert, so bedeutet das, das jede Profilsektion annähernd die untere, erlaubte Wanddicke aufweist.

Wenn auf Grund beliebiger Störgrößen in einer Profilsektion, z.B. an einem Haken, ein Unterschreiten der minimalen Wanddicke auftritt, führt dies meistens auch zu einer weiteren negativen Ausprägung der örtlichen Geometrie (z.B. dem "Hängen" einer Kante oder eine ungenaue Ausprägung der Hinterschneidung des Hakens).

Um diese eine Profilsektion in die richtige Qualität überzuführen, ist es eine gängige Maßnahme, entweder den Durchsatz zu erhöhen oder die Abzugsgeschwindigkeit zu verringern. Jede der beiden Maßnahmen führt zu einer örtlichen Verdickung der Wandstärke in der fraglichen Profilsektion, aber unweigerlich auch zu einer Verdickung aller anderen Profilsektionen. Letztendlich wird zwar ein qualitätsmäßig entsprechendes Kunststoffprofil erzeugt, es wird aber ein höherer Materialeinsatz erforderlich.

In der US 4 100 243 A und der GB 2 324 756 A ist jeweils eine Kühlung in einer Kalibriervorrichtung beschrieben.

Die FR 942 297 A beschreibt eine Düse zum Strangpressen.

Die WO 2006/050549 A2 beschreibt eine Formgebungseinrichtung sowie ein Verfahren zur Formgebung und Abkühlung von Gegenständen, insbesondere Hohlprofilen.

Die DE 198 25 892 A1 beschreibt eine Behandlungsvorrichtung für eine Schmelze.

In DE 299 12 972 U1 und JP 2003 305763 A sind Extrusionswerkzeuge zum Extrudieren von beliebigen fließfähigen Materialien beschrieben.

Die WO 2006/096898 A2 betrifft eine Traganordnung zur Halterung mehrerer in Extrusionsrichtung hintereinander angeordneter Kalibrierwerkzeuge einer Kalibriervorrichtung an einem Kalibriertisch einer Extrusionsanlage. Die Traganordnung umfasst eine Tragplatte sowie eine von dieser getrennte Aufnahmeplatte. Zwischen der Tragplatte und der Aufnahmeplatte ist eine Gelenkanordnung vorgesehen, mit welcher die Tragplatte bezüglich der Aufnahmeplatte relativ dazu räumlich verstellbar ausgebildet ist.

Die JP 2000 158514 A betrifft die Herstellung einer Kalibriervorrichtung für das Extrudieren mit hoher Maßgenauigkeit und ohne Dimensionsminderung.

Es ist daher die Aufgabe, eine Extrusionsvorrichtung und ein Verfahren zu entwickeln, bei denen die Wanddickenverteilung eines extrudierten Kunststoffprofils effizient und gezielt beeinflusst werden kann.

Die Aufgabe wird durch eine Vorrichtung mit den Merkmalen des Anspruchs 1 gelöst.

Dabei weist eine Extrusionsvorrichtung für die Extrusion von Kunststoffprofilen mit abstehenden, einwandigen Profilsektionen, nämlich einer Düsenplatte oder mehreren Düsenplatten, mindestens einen Kunststoffschmelze Fließkanal für die abstehende, einwandige Profilsektion auf, wobei mindestens ein Wandbereich des Kunststoffschmelze Fließkanals für die abstehnende einwandige Profilsektion mit einer lokalen Temperiervorrichtung zur Einstellung der Strömungsgeschwindigkeit der Kunststoffschmelze gezielt temperierbar ist. Der zu temperierende mindestens eine Wandbereich weist eine Längendimension von etwa 20 bis 80 mm und / oder eine Breitendimension von etwa 3 bis 20 mm auf und die lokale Temperiervorrichtung ist in räumlicher Nähe zum mindestens einen Wandbereich des Fließkanals für die abstehende, einwandige Profilsektion (11) angeordnet, und für mindestens einen Teilbereich in der einen Düsenplatte oder in den mehreren Düsenplatten für Zuläufe eines Temperiermediums eine thermische Isoliervorrichtung vorgesehen ist, wobei die Isoliervorrichtung einen Luftspalt und / oder ein Isoliermaterial aufweist.

Da das Fließverhalten der Kunststoffschmelze auf Grund der Temperaturabhängigkeit der Viskosität selbst temperaturabhängig ist, ändert sich die Strömungsgeschwindigkeit lokal in Abhängigkeit von der Temperierung. Durch die lokal gezielte Temperierung an mindestens einem Wandbereich ist es möglich, die Wandstärken der zuordbaren Querschnitte des Kunststoffprofils punktuell, also weitgehend ohne Auswirkungen auf die übrigen Profilsektionen zu beeinflussen. Dies ist insbesondere bei vom Kunststoffprofil abstehenden, einwandigen Profilsektionen der Fall.

Damit sind die Wanddicken z.B. von einwandigen Profilsektionen wie Haken durch Merkmale in der Extrusionsdüse beeinflussbar, um einerseits ein Steckenbleiben des Kunststoffprofils in der Kalibrierung infolge zu großer Wanddicke zu verhindern und andererseits unzulässige Geometrieabweichungen infolge zu geringer Wanddicke (z.B. unvollständig ausgeformte Kanten) zu vermeiden.

Vorteilhaft ist eine Ausführungsform, wenn die Temperatur des mindestens einen Wandbereichs des Fließkanals für die abstehende, einwandige Profilsektion bis zu 30°C oberhalb oder unterhalb der mittleren Temperatur der Extrusionsdüse temperierbar ist. Dieser Temperaturbereich reicht aus, um eine wirksame Veränderung der Strömungsverhältnisse zu bewirken.

Ferner ist es vorteilhaft, wenn bei einer Ausführungsvariante die lokale Temperiervorrichtung in räumlicher Nähe zum zu temperierenden mindestens einen Wandbereich des mindestens einen Fließkanals für Kunststoffschmelze angeordnet ist, insbesondere auch in der Nähe der Austrittsöffnung der Extrusionsdüse. In diesem Bereich wirkt sich eine gezielte Veränderung der Strömungsgeschwindigkeit besonders effizient aus. Konkret ist es vorteilhaft, wenn bei einem Ausführungsbeispiel der mindestens eine Wandbereich zwischen 0 bis 100 mm stromaufwärts vom Austritt der Extrusionsdüse angeordnet ist.

In einer weiteren Ausführungsform ist der mindestens eine zu temperierende Wandbereich in der Düsenaustrittsplatte unmittelbar stromaufwärts vom Austritt der Extrusionsdüse angeordnet, wobei der mindestens eine Wandbereich eine Dimension in Extrusionsrichtung von 5 bis 20 mm, bevorzugt 6 bis 10 mm, und eine Dimension quer zur Extrusionsrichtung von etwa 20 bis 150 mm, bevorzugt über die gesamte Breite der zugeordneten Profilfläche, aufweist. Bei dieser Ausführungsform erstreckt sich die Temperiervorrichtung nicht sehr weit in die Extrusionsdüse hinein, sondern ist bewusst nur in einem schmalen Bereich am Austritt angeordnet. Dabei kann es aber sinnvoll sein, um z.B. den Glanz zu verstärken, dass die Temperiervorrichtung sich über einen größeren Bereich des Extrusionsprofils erstreckt.

Die lokale Temperiervorrichtung muss nicht immer ein einziges Teil sein, sondern es kann bei Ausführungsformen auch vorteilhaft sein, wenn die lokale Temperiervorrichtung mindestens einen Temperierkanal, mindestens ein elektrisches Heizmittel, insbesondere eine Induktions- oder Widerstandsheizung und / oder mindestens ein thermoelektrisches Element aufweist. Damit sind auch Kombinationen von Temperierelementen möglich, die zusammen die lokale Temperiervorrichtung bilden. So ist es durchaus möglich, einen Teil der lokalen Temperiervorrichtung nur für die Kühlung, und einen anderen für die Heizung zu verwenden. Auch ist es möglich, die gleiche Baugruppe (z.B. Temperierkanäle) zu unterschiedlichen Zeiten für die Heizung und / oder zur Kühlung zu verwenden.

Dabei ist es bei einer Ausführungsform vorteilhaft, wenn ein Temperierkanal von einem Temperiermedium, insbesondere Raumluft, kalter und / oder erhitzter Luft, einem Gas und / oder einer Flüssigkeit durchströmbar ist, wobei die Durchströmung mit einer Flüssigkeit insbesondere in einem geschlossenen Kreislauf und die Durchströmung mit einem Gas in einem offenen Kreislauf erfolgt. Bei der Verwendung von Luft, z.B. Raumluft zur Kühlung ist die Arbeit in einem offenen Kreislauf besonders vorteilhaft, da die Luft einfach wieder in den Raum geblasen werden kann. Dabei sind die Temperatur und/oder die Strömungsgeschwindigkeit, zusammengefasst dessen Temperierwirkung der Vorrichtung, veränderbar, entweder getrennt für jeden einzelnen Temperierkanal oder gemeinsam für alle Temperierkanäle oder gemeinsam für Gruppen von Temperierkanälen.

Für eine Kühlung liegt eine vorteilhafte Ausführungsvariante vor, wenn das gekühlte Temperiermedium, insbesondere für den Fall von Gas eine Temperatur zwischen -50 bis 30°C aufweist und für den Fall von Flüssigkeit eine Temperatur zwischen 15 und 180 °C aufweist, wobei insbesondere nur die Austrittszone der Extrusionsdüse gekühlt wird.

Für eine Erhitzung liegt eine vorteilhafte Ausführungsvariante vor, wenn das erwärmte Temperiermedium, insbesondere für den Fall von Gas eine Temperatur zwischen 250 bis 500°C aufweist und für den Fall von Flüssigkeit eine Temperatur zwischen 200 und 280 °C aufweist, wobei insbesondere nur die Austrittszone der Extrusionsdüse geheizt wird.

Es ist vorteilhaft, wenn eine Ausführungsform mindestens einen Temperierkanal mit einer Breitenerstreckung entsprechend der Breitendimension des zugeordneten zu temperierenden Wandbereichs des Fließkanals für die abstehende, einwandige Profilsektion aufweist und / oder die Spalthöhe mindestens eines Temperierkanals zwischen etwa 0,3 bis 5 mm, bevorzugt bis 2 mm, liegt. Diese Abmessungen sind geeignet, einen effizienten Wärmeübergang vom Temperierkanal zur Kunststoffschmelze sicherzustellen.

Ferner ist es vorteilhaft, wenn die lokale Temperiervorrichtung einer Ausführungsform gegenüber der Extrusionsdüse, nämlich einer Düsenplatte oder mehreren Düsenplatten mit einem Luftspalt und / oder mittels einer wärmedämmenden Zwischenlage wärmetechnisch isoliert sind, so dass an der Oberfläche des Fließkanals für die abstehende, einwandige Profilsektion höhere Temperaturdifferenzen wirksam werden.

Besonders vorteilhaft ist eine Ausführungsformen, wenn eine Koppelung einer Steuer- oder Regelvorrichtung zur Ansteuerung der lokalen Temperiervorrichtung zur Beeinflussung einer Wanddicke des Kunststoffprofils besteht, wobei mindestens eine Messgröße die Wanddicke, die Spaltbreite eines Luftspaltes in einer Kalibrierungsvorrichtung, eine räumliche Ausdehnung des Kunststoffprofils nach dem Verlassen der Extrusionsdüse und / oder ein gemessener Rückstaudruck in der Kalibrierungsvorrichtung ist.

Vorteilhafterweise ist bei einer Ausführungsform die Strömungsgeschwindigkeit, die Durchflussmenge, der Druck und / oder die Temperatur des Temperiermediums, insbesondere Luft, vor dem Einlauf in die Temperiervorrichtung gezielt einstellbar. Eine Aufheizung oder Kühlung des Temperiermediums kann vor dem Eintritt in die Düse effizient erfolgen.

Dabei ist es vorteilhaft, wenn bei einer Ausführungsform eine Steuer- oder Regelungsvorrichtung eine zeitliche Veränderung der Temperierung des mindestens einen Wandbereichs des Fließkanals für die abstehende, einwandige Profilsektion gezielt vornehmen kann, insbesondere zur Einstellung eines kontrolliert langsamen Temperaturübergangs (5 bis 15 K / min) .

Zusätzlich oder alternativ kann bei Ausführungsvarianten auch die Temperatur des Temperiermediums dadurch geändert werden, dass die Strömungsgeschwindigkeit des Temperiermediums in der lokalen Temperiervorrichtung (z.B. einem Heiz- oder Kühlkanal) verändert wird, indem eine Drosselvorrichtung zum Zulauf vorgesehen ist, wobei die Drosselvorrichtung insbesondere mit einer Steuer- oder Regelvorrichtung koppelbar ist.

Durch die Isoliervorrichtung wird verhindert, dass sich die Temperatur des Temperiermediums insbesondere innerhalb der Düsenplatte oder in den mehreren Düsenplatten ändert, indem z.B. ein Temperaturverlust durch Wärmeleitung eintritt.

Die Aufgabe wird auch durch ein Extrusionsverfahren von Kunststoffprofilen, insbesondere für Kunststoffprofile mit Hohlkammern mit den Merkmalen des Anspruchs 12 gelöst.

Dabei liegt ein Fließkanal für die abstehende einwandige Profilsektion, nämlich in einer Düsenplatte oder mehreren Düsenplatten für Kunststoffschmelze vor, wobei die Kunststoffschmelze im mindestens einen Fließkanal für die abstehende, einwandige Profilsektion zur Einstellung der Strömungsgeschwindigkeit der Kunststoffschmelze an mindestens einem Wandbereich des Fließkanals für die abstehende, einwandige Profilsektion durch Ändern der Temperatur mit einer lokalen Temperiervorrichtung veränderbar ist, wobei der zu temperierende mindestens eine Wandbereich eine Längendimension von etwa 20 bis 80 mm und / oder eine Breitendimension von etwa 3 bis 20 mm aufweist, und die lokale Temperiervorrichtung in räumlicher Nähe zum mindestens einen Wandbereich des Kunststoffschmelze-Fließkanals für die abstehende, einwandige Profilsektion angeordnet ist, und / oder wobei für mindestens einen Teilbereich in der einen Düsenplatte oder in den mehreren Düsenplatten für Zuläufe für ein Temperiermedium eine thermische Isoliervorrichtung vorgesehen ist, wobei die Isoliervorrichtung einen Luftspalt und / oder ein Isoliermaterial aufweist. Eine Änderung der Temperatur dieses mindestens einen Wandbereichs bewirkt eine Änderung des Strömungswiderstandes und dadurch der Strömungsgeschwindigkeit der Kunststoffschmelze.

Dabei ist es vorteilhaft, wenn bei einer Ausführungsvariante der mindestens eine Wandbereich des Fließkanals für die abstehende, einwandige Profilsektion bis zu 30°C oberhalb oder unterhalb der mittleren Düsentemperatur temperiert wird.

Auch liegt eine vorteilhafte Ausführungsform vor, wenn mindestens ein Temperierkanal von einem Temperiermedium, insbesondere Luft bei Raumtemperatur, gekühlter und / oder erhitzter Luft, einem Gas und / oder einer Flüssigkeit durchströmbar wird, wobei die Durchströmung mit einer Flüssigkeit insbesondere in einem geschlossenen Kreislauf und die Durchströmung mit einem Gas in einem offenen Kreislauf erfolgt. Das gekühlte Temperierfluid, insbesondere Gas, liegt bei Ausführungsvarianten vorteilhafterweise in einem Temperaturbereich zwischen -50 bis 30°C, insbesondere bei Raumtemperatur, wobei insbesondere nur die Austrittszone der Extrusionsdüse temperiert wird. Für die Heizung kann Luft mit einer Temperatur zwischen 200 und 500°C verwendet werden.

Ferner stellt ein Verfahren eine vorteilhafte Ausführungsform dar, bei dem eine Steuerung oder Regelung eine Ansteuerung der lokalen Temperiervorrichtung zur Beeinflussung einer Wanddicke des Kunststoffprofils bewirkt, wobei mindestens eine Messgröße die Wanddicke, die Spaltbreite des Luftspaltes in einer Kalibrierungsvorrichtung, eine räumliche Ausdehnung des Kunststoffprofils nach dem Verlassen der Extrusionsdüse und / oder ein gemessener Rückstaudruck in der Kalibrierungsvorrichtung ist. Dabei liegt eine vorteilhafte Ausführungsvariante vor, wenn die Strömungsgeschwindigkeit, die Durchflussmenge, der Druck und / oder die Temperatur des Temperiermediums, insbesondere Luft, vor dem Einlauf gezielt eingestellt wird.

Die Erfindung wird anhand verschiedener Ausführungsbeispiele erläutert. Dabei zeigen
Fig. 1 eine Vorderansicht der Austrittsplatte eines Extrusionswerkzeugs;
Fig. 2 eine Schnittansicht eines extrudierten Kunststoffprofils passend zur Extrusionsdüse in Fig. 1;
Fig. 3 eine Schnittansicht A-A aus Fig. 1 für eine erste Ausführungsform;
Fig. 4 eine Schnittansicht durch ein Extrusionswerkzeug mit einer zweiten Ausführungsform für eine Temperierung;
Fig. 5 eine schematische Vorderansicht einer dritten Ausführungsform für eine Temperierung;
Fig. 6 eine schematische Vorderansicht einer vierten Ausführungsform für eine Temperierung;
Fig. 7 eine Detailansicht der vierten Ausführungsform gemäß Fig. 6;
Fig. 8 eine perspektivische Darstellung der Ansicht aus Fig. 7;
Fig. 9 eine Draufsicht auf die Schnittebene der Fig. 8:
Fig. 10: eine Querschnittansicht eines Ausschnitts eines Kunststoffprofils mit korrekter Ausformung der Profilsektionen;
Fig. 11: eine Querschnittansicht eines Ausschnitts eines Kunststoffprofils mit teilweise überfüllten Profilsektionen;
Fig. 12: eine Querschnittansicht eines Ausschnitts eines Kunststoffprofils mit einer Profilsektion, die nur unzureichend aufgefüllt ist;
Fig. 13: eine schematische Darstellung einer Temperatursteuerung mit einer Erweiterung für eine Temperaturregelung;
Fig. 14: eine schematische Darstellung einer weiteren Ausführungsform einer Temperaturregelung;
Fig. 15: eine schematische Darstellung einer dritten Ausführungsform einer Temperaturregelung;
Fig. 16: eine Vorderansicht einer weitere Ausführungsform einer Austrittsplatte, mit einer lokalen Temperiervorrichtung;
Fig. 17: eine Seitenansicht der Ausführungsform gemäß Fig. 16;
Fig. 18: eine Schnittansicht einer Ausführungsform mit einer thermischen Isolierung eines Zulaufs/Ablaufs für Temperiermedium;
Fig. 19A: eine perspektivische Ansicht des Schnittes gemäß Fig. 18;
FIg. 19B: eine vergrößerte Ansicht aus dem Schnit gemäß Fig. 19A.

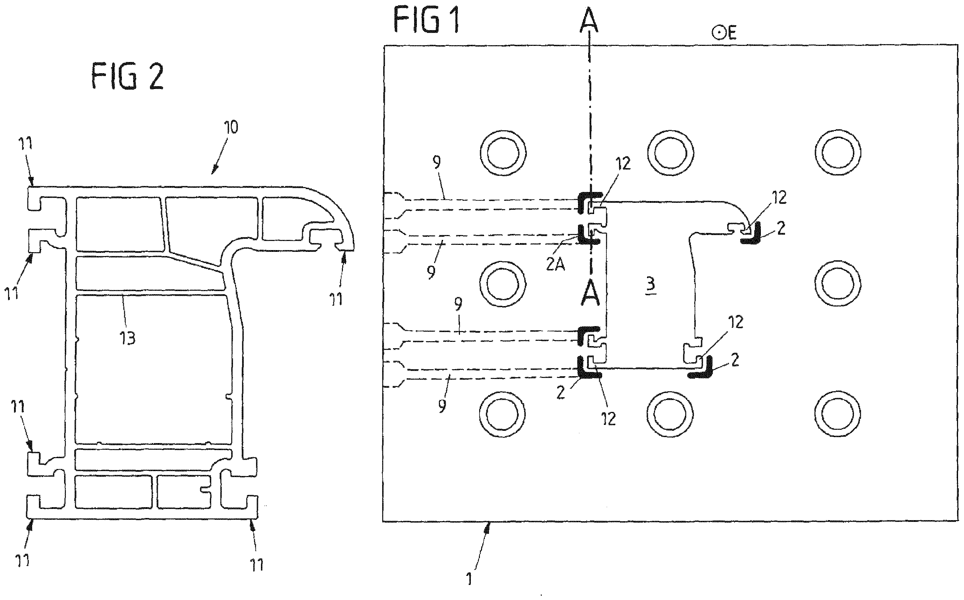

In Fig. 1 ist eine Düsenplatte 1 einer Extrusionsvorrichtung in einer Vorderansicht dargestellt.

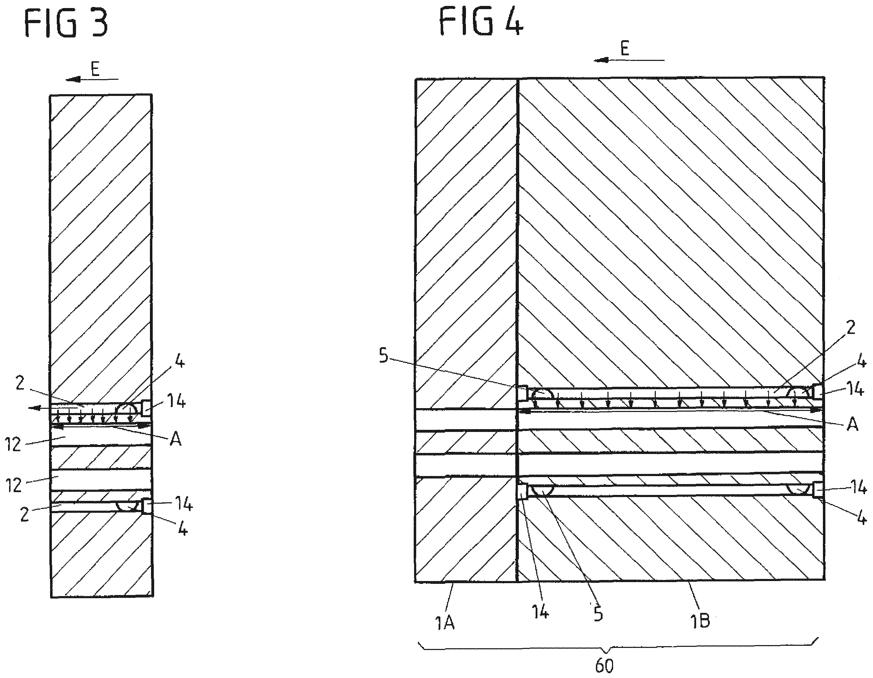

Dabei weist eine Extrusionsvorrichtung für die Extrusion von Kunststoffprofilen eine Extrusionsdüse 60 mit einem Fließkanal 3 für die Kunststoffschmelze auf. Die Extrusionsdüse 60 besteht aus mehreren Düsenplatten 1A, 1B (siehe Fig. 3, 4), welche quer zur Fließrichtung angeordnet sind, welche untereinander verschraubt sind, damit sie sich infolge des Schmelzedrucks nicht öffnen und keine Kunststoffschmelze in den Trennebenen austreten kann.

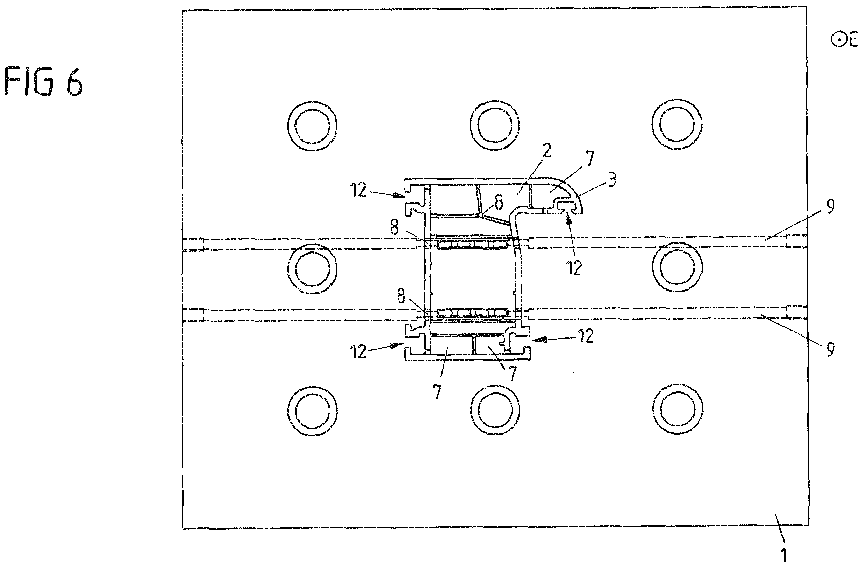

Der Fließkanal 3 durchsetzt jede einzelne Düsenplatte 1A, 1B. Am Eintritt in die Extrusionsdüse 60 und am Austritt der Schmelze aus der Extrusionsdüse 60 weist der Fließkanal 3 einen einzigen, geschlossenen Querschnitt auf. Entlang des Fließweges kann der Fließkanal 3 in mehrere Äste unterteilt sein, das heißt innerhalb einzelner Düsenplatten 1A, 1B weist der Fließkanal 3 mehrere Einzelquerschnitte auf, welche häufig durch sogenannte Speichen (siehe Fig. 6) voneinander getrennt sind. Die gesamte Extrusionsdüse 60 wird auf eine Temperatur, welche etwa mit der Schmelzetemperatur übereinstimmt, beheizt. Dies erfolgt über eine oder mehrere Heizzonen. Häufig werden vier Heizzonen vorgesehen (hier aus Gründen der Einfachheit nicht dargestellt), welche jeweils über die gesamte Länge der Extrusionsdüse 60 reichen und den vier Hauptrichtungen (oben, unten, links und rechts) zugeordnet sind.

Im Sinne dieser Erfindung werden zusätzlich kleinräumige, lokal wirkende Temperiervorrichtungen 2 vorgesehen. Eine derartige, lokale Temperiervorrichtung ist einem kleinen Ausschnitt der Fließkanalwandung, einem Wandbereich A zugeordnet, um die Temperatur lokal verändern zu können, so dass in der Folge die Strömungsgeschwindigkeit der Schmelze und damit die Wanddicke des Profils im Wirkbereich verändert werden kann.

Die lokale Temperiervorrichtung 2 gemäß dieser Erfindung wird innerhalb einer Extrusionsdüse 60 vorgesehen. Eine derartige Extrusionsdüse 60 besteht aus mehreren Düsenplatten 1. Die Extrusionsdüse 60 ist dabei die Gesamtheit der metallischen Teile, die vom Fließkanal 3 durchzogen werden.

Die austrittseitige Düsenplatte wird häufig auch als Austrittsplatte 1A bezeichnet. Wie im Folgenden noch erläutert wird, wird der lokal zu temperierende Wandbereich A in enger Nähe zum Fließkanal 3 angeordnet, bevorzugt und meistens ausreichend nur in der Austrittsplatte 1A oder in der zweiten Düsenplatte 1B. Es ist aber durchaus möglich, die Temperierzone plattenübergreifend über mehrere Düsenplatten auszubilden.

In Fig. 1 ist eine Düsenplatte 1 einer Extrusionsdüse 60 in einer Vorderansicht dargestellt. Diese Ansicht entspricht der Vorderansicht der Extrusionsdüse 60.

Die Extrusionsrichtung E zeigt senkrecht aus der Zeichnungsebene heraus. Das dazugehörige Kunststoffprofil 10 ist im Querschnitt in Fig. 2 dargestellt.

Das Kunststoffprofil 10 tritt aus der Extrusionsdüse 60 aus. Bei konstanten Betriebsparametern im Fließkanal 3 (z.B. Druck am Eintritt der Extrusionsdüse 60, Schmelzedurchsatz, gleichbleibende Temperatur- und rheologische Verhältnisse der Schmelze am Düseneintritt, Temperaturverlauf in der Extrusionsdüse 60 u.a.) stellt sich ein bestimmtes, örtliches Geschwindigkeitsprofil der Schmelze am Austritt der Extrusionsdüse 60 ein.

In Fig. 1 sind Extrusionsdorne 7, die zur Bildung der Extrusionsspalten benötigt werden, aus Gründen der Übersichtlichkeit nicht dargestellt. In Fig. 6 hingegen sind die Extrusionsdorne 7 dargestellt.

An jedem Breitenabschnitt des Austrittsspaltes ergibt sich eine mittlere Geschwindigkeit, welche über die betreffende Querschnittsfläche den dem jeweiligen Breitenabschnitt zuordenbaren Durchsatz ergibt. Die Wanddicke in diesem Breitenabschnitt des Kunststoffprofils 10 (siehe Fig. 2) hängt dann zusätzlich noch von der Abzugsgeschwindigkeit ab, welche einheitlich für den gesamten Profilquerschnitt ist.

Grundsätzlich ist es eine Zielsetzung bei der Konstruktion und Fertigung einer Austrittsdüsenplatte 1A, die mittlere Austrittsgeschwindigkeit am Austritt der Extrusionsdüse 60 möglichst konstant über dem gesamten Austrittsspalt zu gestalten. Physikalische und rheologische Effekte stehen dieser Zielsetzung mehr oder weniger entgegen, so dass zusätzlich die Dicke des Austrittsspaltes angepasst werden muss, um die zuordenbare, örtliche Wanddicke des Kunststoffprofils 10 zu verändern und an die geforderte Profilgeometrie anzupassen.

Es hat sich jetzt gezeigt, dass das örtliche Geschwindigkeitsprofil am Austritt der Extrusionsdüse 60 bei im Wesentlichen unveränderten Randbedingungen durch die örtliche Temperatur der Kanalwand der Extrusionsdüse 60, der Düsenwandtemperatur, gezielt beeinflusst werden kann. Vermindert man in einem Breitenabschnitt von z.B. 10 mm stromaufwärts (d.h. vom Austritt des Extrudats betrachtet) die Düsenwandtemperatur und lässt die übrigen Düsenwandtemperaturen unverändert, so vermindert sich in diesem Breitenabschnitt die Strömungsgeschwindigkeit. Die verminderte Strömungsgeschwindigkeit führt zu einer örtlichen Verminderung der Wanddicke - relativ zu den kaum veränderten Wanddicken aller anderen Profilsektionen.

Unter einer Profilsektion wird hier ein auf den Querschnitt bezogener Ausschnitt des Kunststoffprofils 10 verstanden. Die einwandigen Teile 11 an den vier Ecken des Kunststoffprofils 10 sind solche Profilsektionen (siehe Fig. 2).

Änderungen der Düsenwandtemperaturen (d.h. Temperaturen in Wandbereichen A in der Extrusionsdüse 60) in ausgewählten Profil- bzw. Düsensektionen von etwa +/- 30°C von der mittleren Temperatur an der Extrusionsdüse 60 sind zulässig, ohne dass dies störende Auswirkungen auf andere Qualitätsparameter des Kunststoffprofils 10 hat. Die Einstellung der Extremwerte dieses Temperaturbereiches führt zu Änderungen der mittleren Strömungsgeschwindigkeit von etwa +/-15 %, was die Möglichkeit eröffnet, nahezu alle zufällig auftretenden Wanddickenabweichungen infolge unvermeidbarer Störgrößen auf die Sollwanddicke zurückzuführen.

Gerade bei der Profilextrusion von Fensterprofilen aus PVC-hart ist diese Vorrichtung und dieses Verfahren vorteilhaft, weil das Strömungsprofil der Kunststoffschmelze bei den hierbei eingesetzten PVC-Rezepturen im Gegensatz zu anderen Kunststoffen vorwiegend durch das Wandgleiten bestimmt wird.

Die Kunststoffschmelze gleitet unmittelbar an der Stahlwand des Fließkanals 3 entlang; allenfalls befindet sich eine dünne Gleitschicht aus abgelagerten Gleitmitteln dazwischen. Die Geschwindigkeit an der Wand des Fließkanals 3 ist nicht Null.

Gezielte Änderungen der Düsenwandtemperatur wirken sich daher unmittelbar auf den Gleitwiderstand der Kunststoffschmelze aus. Eine tiefere Düsenwandtemperatur erhöht den Gleitwiderstand und führt dadurch zu einer geringeren Gleitgeschwindigkeit.

Fast alle anderen Kunststoffschmelzen außer PVC werden durch das Scherfließen dominiert, wobei die Schmelze an der Stahlwand haftet. Hierbei ist die Geschwindigkeit an der Wand des Fließkanals 3 Null und in der Mittelebene am größten; der Verlauf entspricht etwa einer Parabel höherer Ordnung. Bei derartigen Schmelzen wirkt sich eine gezielte Änderung der Düsenwandtemperatur weniger auf die Strömungsgeschwindigkeit bzw. die mittlere Strömungsgeschwindigkeit aus, weil weitgehend unabhängig von der Temperatur der Stahlwand hier ohnehin keine Strömungsgeschwindigkeit vorliegt.

Bei einem Absenken der Düsenwandtemperatur werden infolge Wärmeleitung erst allmählich tiefere Schichten der Schmelze abgekühlt und dadurch kleinere Schergeschwindigkeiten und in der Folge kleinere Strömungsgeschwindigkeiten bewirkt. Eine Änderung der Düsenwandtemperaturen im selben Ausmaß wie oben angeführt, also +/- 30°C, wirkt sich weniger deutlich aus, und führt zu Änderungen der mittleren Strömungsgeschwindigkeit von etwa +/- 7%.

Dennoch können die im Folgenden beschriebenen Ausführungsformen auch bei anderen Kunststoffen als PVC-hart verwendet werden.

Üblicherweise sind die Extrusionsdüsen 60 so temperiert, dass der Düsenkörper eine Temperatur aufweist, welche etwa der mittleren Massetemperatur der Kunststoffschmelze entspricht, d.h. die Extrusionsdüse 60 ist auf ca. 190°C temperiert (z.B. für den Fall von PVC). Im Falle von PVC-hart stellt sich eine Düsenwandtemperatur im überwiegenden Teil des Düsenspaltes von 190 bis 195°C ein.

Werden im Falle einer Doppelextrusion zwei gleichartige Extrusionsdüsen 60 parallel beaufschlagt, so ist zu erwarten, dass durch beide Düsen der gleiche Massestrom, jeweils die Hälfte des Gesamt-Massestromes, fließt. Dies trifft im Großen und Ganzen zu, aber Unterschiede bis zu 10% können durchaus auftreten, weil der Durchsatz sehr empfindlich auf geringfügige, geometrische Unterschiede infolge unvermeidbarer Fertigungsfehler sowie auf geringfügige Unterschiede im Temperaturfeld der beiden Masseströme reagiert.

Durch Erhöhen der einen Düsenwandtemperatur und Absenken der anderen Düsenwandtemperatur um jeweils bis zu 5°C kann der Durchsatz-Unterschied ausgeglichen werden. Da von der Temperaturänderung jeweils die gesamte Extrusionsdüse 60 betroffen ist, sind im Wesentlichen alle Wanddicken des Kunststoffprofils 10 gleichermaßen betroffen.

Allerdings ist im Falle von komplexen Hohlkammerprofilen (siehe Fig. 2) die Auswirkung auf Innenwände 13 wesentlich geringer als jene auf Außenwände, da sich die Temperaturänderung nicht so stark auf Dornteile der Extrusisonsdüse 3 auswirkt.

Ferner hängt die Wirkung der Temperierung auch davon ab, ob von der Temperaturänderung nur eine Kanalwandung betroffen ist - wenn diese eine Hohlkammer ausbildet -, oder ob beide Kanalwandungen betroffen sind - wenn abstehende, einwandige Profilsektionen 11 ausgebildet werden. Dadurch sind auch die Grenzen bei allgemeiner Änderung der Düsentemperatur aufgezeigt; einwandige Profilsektionen 11 verändern die Wanddicken etwa doppelt so stark wie Hohlkammer-Profilsektionen 13, Innenwände werden kaum beeinflusst.

Im Rahmen der hier beschriebenen Vorrichtung und dem beschriebenen Verfahren wird die Düsenwandtemperatur mindestens in einem Wandbereich A gezielt temperiert, d.h. es wird eine Düsenwandtemperatur eingestellt, die ober- oder unterhalb der mittleren Temperatur an der Extrusionsdüse 60 liegt.

Prinzipiell sind für die Ausführungsformen alle Mittel geeignet, welche gezielt (z.B. für Wandbereiche A des Fließkanals 3, 12) eine örtliche Änderung der Düsenwandtemperatur bewirken können

Beispielsweise werden in räumlicher Nähe der zu temperierenden Profilsektionen 11 in der Extrusionsdüse 60 Temperierkanäle 2 vorgesehen, durch die Temperierfluide, wie z.B. Öle, Luft oder andere Gase, geleitet werden.

Zusätzlich oder alternativ können in räumlicher Nähe der zu temperierenden Profilsektionen 11, 13 elektrische Heizelemente verwendet werden.

Vorteilhaft kann auch die Verwendung von thermoelektrischen Elementen, wie z.B. Peltierelementen sein, die in räumlicher Nähe zu dem temperierenden Wandbereich der Extrusionsdüse 60 angeordnet werden. Hierbei ist vorteilhaft, dass eine Heizung oder eine Kühlung durch Einstellung des Stromflusses unmittelbar bereitgestellt werden kann. Eine thermische Aufbereitung von Fluiden entfällt.

Vorteilhafterweise ist das örtliche Ändern der Düsenwandtemperatur nur in einem kleinen Längenbereich A im Vergleich zur Gesamtlänge der Extrusionsdüse 60 erforderlich. Dabei erfolgt die Temperierung vorteilhafterweise nahe am Düsenaustrittsbereich. Extrusionsdüsen 60 für Fensterprofile weisen etwa eine Gesamtlänge von 150 bis 300 mm auf. Die Temperaturänderungen durch die lokale Temperiervorrichtung erfolgt bevorzugt nur austrittseitig im Längenbereich bis 100 mm stromaufwärts, wobei die Längendimension des zu temperierenden Wandbereichs selbst etwa 20 bis 80 mm betragen soll. Je weiter stromaufwärts die Temperaturänderung angreift, umso breiter ist die Profilsektion, die von der Dickenänderung betroffen ist, was in vielen Fällen jedoch nicht erwünscht ist.

Bei Extrusionsdüsen 60 für Fensterprofile betrifft dies entweder nur die Austrittsplatte 1A (übliche Dicke etwa 15 bis 25 mm) und/oder die nächst folgende Düsenplatte 1B stromaufwärts, d.h. entgegen der Extrusionsrichtung E gezählt. Die üblichen Dicken der Düsenplatten 1 betragen etwa 20 bis 50 mm.

In Anbetracht des Aufgabenbereiches und Umfeldes von Extrusionsdüsen 60 (hohe Drücke der Schmelze, Dichtwirkung in Trennebenen für die Kunststoffschmelze und das Temperierfluid, Flächenheizkörper an den Außenflächen u. a.), eignet sich Luft sehr gut als Temperiermedium.

Luft als Temperierfluid weist folgende Vorteile auf, wobei später noch vorteilhafte Steuerungen und Regelungen beschrieben werden:
- Es ist kein geschlossener Temperierkreislauf erforderlich. Die Luft muss nur eintrittsseitig gesteuert oder geregelt werden, austrittsseitig kann sie ins Freie geblasen werden. Wird z.B. Druckluft mit Raumtemperatur zum Durchströmen von Kühlkanälen mit einer Spaltweite von etwa 2 mm verwendet und weisen die Zuführ- und Ableitbohrungen in der Extrusionsdüse 60 Durchmesser im Bereich von 2 bis 5 mm auf, so genügt eingangsseitig ein Druck im Bereich von 0,05 bis 0,3 bar, um an der Fließkanalwandung die Temperatur bereichsweise um etwa 3 bis 20°C abzusenken. Sind konstruktionsbedingt kleinere Dimensionen für den Temperierkanal und/oder die Versorgungsbohrungen erforderlich, kann durch Erhöhen des anstehenden Drucks bis 6 bar und darüber hinaus problemlos der gewünschte Kühleffekt erreicht werden.
- Es ist keine Verunreinigung bei unkontrolliertem Austritt bzw. bei Undichtigkeiten zu befürchten.
- Die Auswirkung, das heißt die Kühl- bzw. Heizwirkung, kann im benötigten Ausmaß in erster Linie durch Ändern des Luft-Durchsatzes erfolgen bei gleichbleibender Temperatur der Luft. (Entweder Luft bei Raumtemperatur für Kühlzwecke oder Luft bei erhöhter Temperatur bis 500°C für Heizzwecke. Das Aufheizen der Luft kann sehr einfach in einem Heiz-Gebläse oder Heißluft-Fön erfolgen.)
- Verschiedene Temperierbereiche der Wandung der Extrusionsdüse 60 können mit einer gemeinsamen Luftversorgung beaufschlagt werden.
- Es tritt keine Wechselwirkung auf, wenn die Leistung der Luftversorgung (Gesamt-Durchsatz und Druck) ausreichend groß ist. Die erforderliche Leistung zur Versorgung mehrerer Profilsektionen 11, 13 ist ohnehin vergleichsweise gering (Die Gesamtgebläseleistung - ohne Heizleistung - von weniger als 300 Watt ist meistens ausreichend.), so dass diese Leistung beim Betrieb der Extrusionslinie vernachlässigbar gering ist.
- Sind die Hauptparameter für die Temperierung vorab an die Aufgabe gut angepasst (Querschnitt der Temperierkanäle 2, deren Abstand zur Kanalwandung, ausreichender Eingangsdruck durch Versorgung über ein einfaches Gebläse u.a.), so sind kaum größere Störungen infolge Fehlbedienung zu erwarten, weil die örtlichen Düsentemperaturen kaum soweit verändert werden können, dass ein Profilabriss unvermeidbar ist.
- Das Ändern des Luftdurchsatzes kann sehr einfach über Drosselhähne erfolgen oder über Ändern des Drucks eintrittsseitig.
- Als maximaler Druck für die Beaufschlagung einer Kühl-(Heiz-) zone ist ein Überdruck von 0,3 bar meistens ausreichend. Bereits bei einem Eingangsdruck von 0,05 bar (nach einem Drosselhahn) ist die Auswirkung auf die Wanddicke der Profilsektion 11, 13 deutlich erkennbar.

Obwohl die Erfindung nicht nur auf Luft als Temperierfluid beschränkt werden soll, konnte in Versuchen gezeigt werden, dass der gewünschte Zweck, das Absenken der örtlichen Düsenwandtemperatur in eng begrenzten Bereichen A (räumlich gesehen) und in Temperaturbereichen bis zu 20°C sehr einfach und mit geringem technischen Aufwand durch Beaufschlagung mit Raumluft und einem Ausgangsdruck von weniger als 0,3 bar erreicht wird.

Es ist eine sinnvolle Strategie, beim Abstimmen der Extrusionsdüse 60 durch das Nacharbeiten die Wanddicken aller Profilsektionen so einzustellen, dass die einwandigen, abstehenden Profilsektionen 11 ohne Beaufschlagung durch Kühlluft gut mit den Sollwanddicken übereinstimmen oder allenfalls leicht über dem Sollmaß liegen. Dann ist ohne besondere Maßnahmen eine qualitätskonforme Profilproduktion möglich.

Ändern sich Extrusionsparameter in der Art, das kritische Profilsektionen 11, 13 "relativ" zu dick werden und dadurch ein Absenken aller Wanddicken erforderlich machen, kann durch Beaufschlagen dieser Profilzonen durch Kühlluft die Verdickung der Wandstärke verhindert werden.

Insgesamt ist es mit hier beschriebenen Ausführungsformen möglich, unabhängig von einander die Wanddicken verschiedener kritischer Bereiche im Verhältnis zu den nicht individuell beeinflussbaren Wanddicken bei Hohlkammern während der Extrusion einzustellen. Das erlaubt das Absenken des Laufmeter-Gewichtes der Kunststoffprofile 10 bis nahe an die untere Grenze, weil nicht das schwächste Glied, also die dünnste Profilsektion, ein generelles Anheben aller Wanddicken erforderlich machen kann. Wenn man bedenkt, dass das Ausnützen der üblichen Dickentoleranzen das Laufmeter-Gewicht um etwa +/-10% verändern würde, ist klar, in welchem Maß die Wirtschaftlichkeit steigt, wenn man das Durchschnitts-Laufmeter-Gewicht nur um wenige Prozente absenken kann.

Die Anwendung der örtlichen Temperierung ist nicht nur auf einwandige Profilsektionen 11 beschränkt, sondern kann auch auf beliebige Profilsektionen 13, also auch auf Hohlkammerbereiche, ausgedehnt werden. Selbst die Dicke von Innenwänden 13 von Profilen kann mit diesen Ausführungsformen ohne mechanische Nacharbeit im laufenden Extrusionsbetrieb verändert werden.

Dazu können vorteilhafterweise entlang der Kanalbegrenzung Temperierkanäle 2 mit Querschnittsabmessungen im Millimeterbereich (z.B. Dicke senkrecht zum Kunststoffprofil 10: 1 bis 2 mm, Breite parallel zum Kunststoffprofil: 2 bis 6 mm) untergebracht werden, so dass diese Kühlkanäle gezielt mit Luft beaufschlagt werden können. Durch die Extrusionsdüse 60 wird ein Zuleitungskanal zur eigentlichen Beaufschlagungszone in Form einer Bohrung oder Einfräsung in einer Trennebene vorgesehen. Der Luftauslaß (siehe z.B. Fig. 3) könnte im einfachsten Fall stirnseitig aus der Düse erfolgen. Befindet sich dieser Auslass dann im Bereich von Hohlkammern, ist es ohne weiteres möglich, den Luftstrom durch das Profil abzuleiten, weil nur ein relativ kleiner Volumenstrom abgeleitet werden muss, welcher nur unwesentlich den Temperatur- und Druckverlauf in der Hohlkammer beeinflusst.

Andererseits könnte die Strömungsrichtung der Kühlluft auch entgegengesetzt erfolgen, das heißt, die Luft wird am Düsengehäuse abgesaugt, wobei sich das Drosselglied in der Absaugleitung befindet, und die Luft wird von der Stirnseite der Düse, eventuell auch aus Profil-Hohlkammern, angesaugt.

Im Folgenden werden einige Ausführungsbeispiele näher erläutert.

Fig. 1 zeigt die Düsenplatten 1A, 1B einer Extrusionsdüse 60 für ein Rahmenprofil (Fig. 2) aus einem Kunststoffprofil. Die Düsenplatten 1A, 1B weisen einen Fließkanal 3 auf, der in dem Auslass der Extrusionsdüse 60 mündet. Die übrigen Platten sowie die Dornteile 7 sind hier aus Gründen der Übersichtlichkeit nicht dargestellt.

Die formgebende Kontur ist typisch für Fensterprofile (siehe Fig. 2 im Querschnitt): Die Hohlkammerbereiche des Kunststoffprofils 10 werden durch die Kanalwandung der Düsenplatte 1A, 1B und den im Bild nicht dargestellten Dornteilen 7 gebildet. Die abstehenden, einwandigen Profilsektionen 11 werden durch die dargestellten peripheren Fließkanäle 12 ausgeformt, wobei jeweils der Fließkanal 3 die einwandigen Profilsektionen 11 beidseits (und auch am Ende; somit U-förmig) begrenzt und nur durch die Düsenplatte 1A, 1B selbst gebildet wird.

In Fig. 1 sind in der Vorderansicht die Austrittsöffnungen der Temperierkanäle 2 für Luft dargestellt, deren Verlauf im Inneren der Austrittsplatte 1A im Folgenden dargestellt wird. Die Temperierkanäle 2 stellen hier eine Ausführungsform einer lokalen Temperiervorrichtung dar, wobei alternative Ausführungsformen noch beschrieben werden. Grundsätzlich kann die lokale Temperiervorrichtung 2 z.B. mehrere Temperierkanäle 2 aufweisen, die alle identische oder unterschiedliche Temperaturen aufweisen können. Eine lokale Temperiervorrichtung 2 erlaubt die gezielte Temperierung einzelner Wandbereiche (Sektionen) des Fließkanals 3 für ein Kunststoffprofils 10, z.B. gezielt für einen einwandigen Bereich 12 des Kunststoffprofils 10. Die lokale Temperiervorrichtung 2 erwärmt oder kühlt nicht den gesamten Fließkanal 3 am gesamten Umfang, sondern nur bestimmte Wandbereiche A, um gezielt und lokal die Strömung der Kunststoffschmelze zu beeinflussen.

In der Vorderansicht wird deutlich, das die Temperierkanäle 2 räumlich so angeordnet und geformt sind, dass sie die peripheren Fließkanäle 12, die die einwandigen Profilsektionen 11 ausbilden, mindestens teilweise in der Nähe umgeben, um eine effiziente und gezielte Temperierung der peripheren Fließkanäle 12 ermöglichen. Jedem der peripheren Fließkanäle 12 ist somit mindestens ein Temperierkanal 2 zugeordnet. Um die Temperierkanäle 2 bildet sich eine Temperierzone in der Wandung der Fließkanäle 3, 12 aus.

Aus der Temperierzone ergibt sich der Wandbereich A der Fließkanäle 3, 12, der durch die lokale Temperiervorrichtung 2 gezielt erwärmt oder gekühlt werden kann.

In den Fig. 3, 4 und 6 ist der Wärmetransport zum zu temperierenden Wandbereich A durch Pfeile dargestellt.

In Fig. 3 ist eine Schnittansicht (in Fig. 1 durch den Schnitt A-A gekennzeichnet) durch die Düsenplatte 1 dargestellt. Die Extrusionsrichtung E ist durch einen Pfeil dargestellt. Dabei ist den peripheren Fließkanälen 12 jeweils in engem räumlichem Abstand ein Temperierkanal 2 zugeordnet. In Fig. 1 sind die Zuleitungen 9 für die Temperierkanäle 2 dargestellt.

Die Luftversorgung der Temperierkanäle 2 erfolgt in der dargestellten Ausführungsform so, das die Luft (z.B. mit Raumtemperatur als Kühlmedium) seitlich über die Zuleitungen 9 in die Düsenplatte 1 gefördert wird. Die Zuleitungen 9 verlaufen parallel zur Breitseite der Düsenplatte 1. Im Bereich der peripheren Fließkanäle 12 treffen die Zuleitungen 9 auf die Temperierkanäle 2, die hier parallel zu den peripheren Fließkanälen 12 verlaufen. In der Schnittansicht der Fig. 3 ist erkennbar, dass in jedem der Temperierkanäle 2 eine Einlassöffnung 4 für die Luft angeordnet ist.

In Extrusionsrichtung E einlaufseitig gesehen sind die Temperierkanäle 2 jeweils durch einen Stopfen 14 (z.B. aus Kupfer) verschlossen, damit bei geringfügigen Undichtigkeiten in der Trennebene zur benachbarten Düsenplatte keine Kunststoffschmelze aus den Fließleitungen eindringen kann, was zur Verstopfung der Temperierkanäle 2 führen könnte.

Luft als Temperiermedium tritt somit an der Stirnseite der Düsenplatte 1A aus.

Die Temperierkanäle 2 werden bevorzugt mittels Drahterosion hergestellt und in einem Abstand von ca. 1 bis 3 mm etwa parallel zu den Fließkanälen 12 angeordnet.

Die Strömungsgeschwindigkeit der Luft in den Temperierkanälen 2 wird mechanisch, z.B. durch einen Hahn oder eine andere Drosselvorrichtung 30, eingestellt und führt zu einer entsprechenden Temperaturabsenkung der Wandung des Temperierkanals 2, welche sich infolge Wärmeleitung auf die Wandtemperatur im Wandbereich A des Fließkanals 12 für die Kunststoffschmelze auswirkt und den Fließwiderstand und damit die örtliche Strömungsgeschwindigkeit der Kunststoffschmelze verändert.

In Fig. 3 und 4 ist der zu temperierende Wandbereich A im Bereich der Wandung des Fließkanals 3, 12 dargestellt.

Im Zusammenhang mit den Fig. 2 und 3 wird eine Ausführungsform dargestellt, bei der Temperierkanäle 2 mit Luft als Temperiermedium zur gezielten Kühlung eingesetzt werden. Wenn die Luft vor dem Eintreten in die Temperaturkanäle 2 aufgeheizt wird, kann mit der gleichen Anordnung auch eine gezielte Aufheizung erfolgen, was ebenfalls eine gezielte Einstellung der Strömungsgeschwindigkeiten der Schmelze ermöglicht. In diesem Fall wird die Strömungsgeschwindigkeit erhöht.

Grundsätzlich kann als Temperiermedium auch ein anderes Gas oder eine Flüssigkeit wie z.B. Wasser verwendet werden.

Wie später noch erläutert wird, kann mit einer geeigneten Steuer- oder Regelungsvorrichtung die Temperierung in Abhängigkeit von Profileigenschaften erfolgen.

In Fig. 4 ist eine zweite Ausführungsform dargestellt, bei der die Temperierkanäle 2 in die zweite Düsenplatte 1B (Zählrichtung der Platten entgegen der Extrusionsrichtung E) eingebaut sind.

Die Temperierkanäle 2 weisen sowohl eine Zuleitung als auch eine Ableitung für das Temperiermedium auf, wobei die Zuleitungen 9 grundsätzlich so angeordnet sind, wie in Fig. 1 dargestellt, nämlich seitlich der zweiten Düsenplatte 1B. Die wegführenden Leitungen sind dazu parallel angeordnet. In Fig. 4 sind in jedem Temperierkanal 2 jeweils eine Einlassöffnung 4 und eine Auslassöffnung 5 für das Temperiermedium dargestellt. Die Temperierkanale 2 sind dabei zweckmäßigerweise gegenüber den Trennebenen durch Stopfen 14 abgedichtet.

Anders als bei der ersten Ausführungsform tritt aus der ersten Düsenplatte 1A nur die Kunststoffschmelze aus.

In anderen Ausführungsformen können Temperierkanäle 2 sowohl in der ersten Düsenplatte 1A, wie in der zweiten Düsenplatte 1B eingearbeitet sein. Grundsätzlich kann das Temperiermedium in den jeweiligen Temperierkanälen 2 die gleiche Temperatur aufweisen. Es ist aber auch möglich, dass in den Temperierkanälen 2 Temperiermedien strömen, die unterschiedlich temperiert sind. Auch können die jeweiligen Temperiermedien unterschiedlich sein.

Die Temperierung muss nicht ausschließlich mit einem Medium, wie z.B. Kühl- oder Heizluft erfolgen. Zusätzlich oder alternativ kann als lokale Temperiervorrichtung 2 auch ein elektrisches Thermoelement zur Beheizung und / oder Kühlung vorgesehen sein, das bereichsweise die Wandung der Extrusionsdüse 60, insbesondere in den Fließkanälen 12 aufheizt oder abkühlt.

In dem dritten Ausführungsbeispiel wird die Anwendung eines elektrisch betriebenen Heizkörpers 2 für die bereichsweise Temperierung einer Düsenplatte 1 als Extrusionsvorrichtung dargestellt. Heizpatronen 2 werden dazu in hierfür vorgesehen Bohrungen eingesetzt. Anstelle von Heizpatronen 2 können auch Kühlpatronen 2 eingesetzt werden, bei welchen ein elektrisch ausgelöster Kühleffekt, z.B. infolge des Peltier-Effektes, bewirkt wird. Peltier-Elemente werden in der Regel als Flachbauteile ausgebildet, so dass diese platzsparend in entsprechenden Taschen in der Düsenplatte 1 angeordnet sein können.

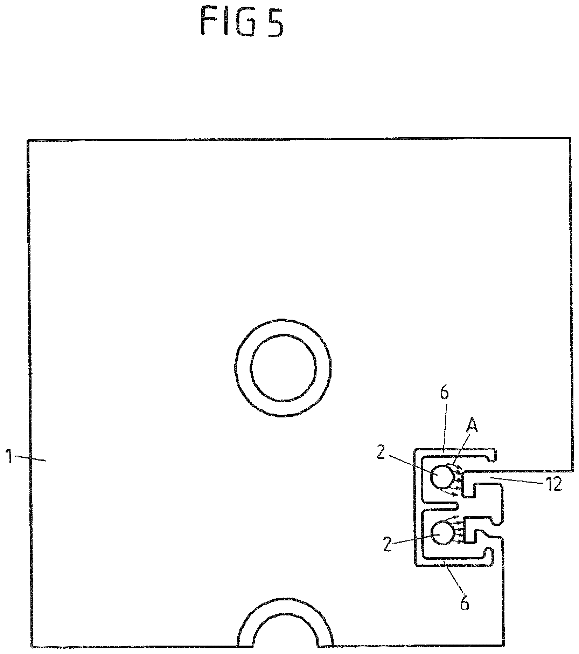

Zusätzlich ist es vorteilhaft, den Wandbereich A zum Düsenkörper hin thermisch zu isolieren, wofür ein Luftspalt 6, wie in Fig. 5 dargestellt, zweckmäßig ist. Alternativ kann anstelle des Luftspaltes 6 auch ein Material mit niedriger Wärmeleitfähigkeit vorgesehen werden.

Grundsätzlich können lokale Temperiervorrichtungen 2, die in den vorhergehenden Ausführungsformen beschrieben wurden, auch miteinander kombiniert werden. So können in ein- und derselben Düsenplatte 1 sowohl ein Temperierkanal 2, wie ein elektrisches Thermoelement als lokale Temperiervorrichtungen 2 verwendet werden.

Die bisherigen Ausführungsformen waren insbesondere auf eine bereichsweise Temperierung des Düsenkanals 3 im Bereich der einwandigen Profilsektionen 11 ausgerichtet. Dies muss aber nicht zwingend der Fall sein. Zusätzlich oder alternativ können auch Wandbereiche A anderer Profilsektionen 13 gezielt temperiert werden.

Es kann damit auch die Wanddicke von Innenwänden 13 eines Kunststoffprofils 10 (Hohlkammerprofils) verändert werden, wie dies im Zusammenhang mit Fig. 6 dargestellt ist. In diesem Beispiel sind auch die Dornteile 7 eingezeichnet, welche benötigt werden, um ein Hohlkammerprofil 10 mit Innenwänden 13 extrudieren zu können. Ohne auf die verschiedenen Ausführungen einzugehen, wie diese Dornteile 7 innerhalb der Extrusionsdüse 60 unter Freilassung der Fließkanäle fixiert werden können, wird eine gängige Ausführungsform beschrieben: Die Dornteile 7 sind mit Stegen 8 (in Fig. 6 nur in Auswahl mit Bezugszeichen versehen) am Düsenkörper befestigt und weisen die gleiche Längserstreckung auf wie die Düsenplatte 1. Die Stege 8 reichen aber nicht bis zum Düsenaustritt, sondern sind gegenüber der Austrittsfläche um ca. 5 bis 15 mm zurückgesetzt. Im Bereich der Stege 8 werden somit mehrere, räumlich getrennte Fließkanäle für die Kunststoffschmelze gebildet. Erst nach dem Auslaufen dieser Stege 8 bildet sich ein einziger, in sich geschlossener Fließkanal 3, welcher letztendlich das Kunststoffprofil 10 als Ganzes ausformt.

In der Düsenplatte 1 sind neben der Düsenöffnung 60 auch noch die Verbindungskanäle 9 für das Temperiermedium, hier wieder Luft dargestellt, die im Inneren der Extrusionsvorrichtung, also hier in der Düsenplatte 1 verlaufen.

In Extrusionsrichtung E nach den Stegen 8 verschweißen die Einzelstränge miteinander zum Kunststoffprofil 10 unter Ausbildung sogenannter Fließnähte.

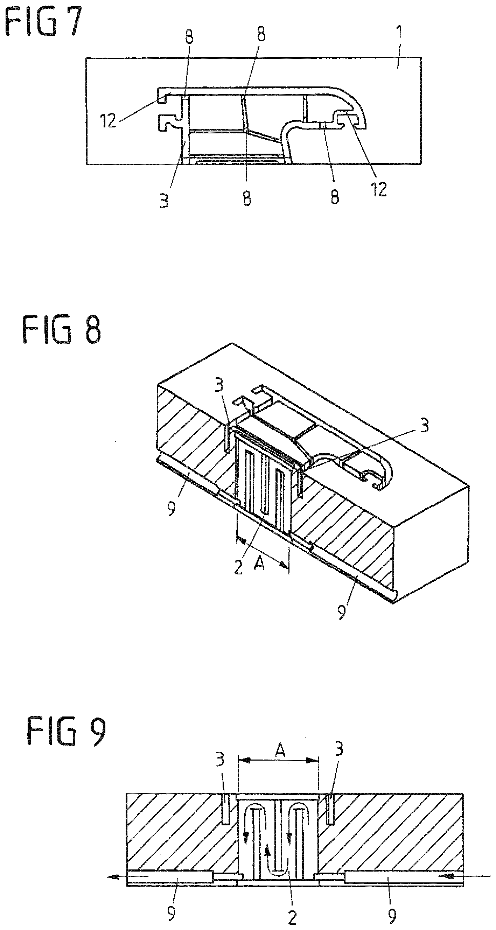

In Fig. 7 ist eine Detailansicht aus Fig. 6, nämlich des oberen Teils der Extrusionsdüse 60 dargestellt. In Fig. 8 ist der gleiche Ausschnitt als perspektivische Ansicht dargestellt. Die Draufsicht auf den Schnitt ist in Fig. 9 dargestellt.

In die Düsenplatte 1 als Extrusionsvorrichtung sind dabei Temperierkanäle 2 eingearbeitet, die räumlich in unmittelbarer Nähe einer zu extrudierenden Innenwand 13 (siehe Fig. 2) liegen. Diese Innenwand 13 bildet (siehe Fig. 2) die obere Wand der größten Hohlkammer im Extrusionsprofil 10.

Die Schnittansicht liegt im Bereich der Speichen 8 und innerhalb des Temperierkanals 2 und der Zu- und Ableitungen 9 des Temperiermediums. Dabei sind auch auslaufseitige Teile des Fließkanals 3 für das Kunststoffprofil 10 zu erkennen.

Aus Stabilitätsgründen ist der Temperierkanal 2 mäanderförmig ausgebildet (siehe Pfeile in Fig. 9). Um Verstopfungen durch eindringende Schmelze oder Verunreinigungen zu vermeiden, ist der Temperierkanal 2 allseitig geschlossen. Das Verschließen an den Stirnseiten des Dornsegmentes erfolgt hier durch Einpressen eines Verschlusspfropfens 14 aus Kupfer. Da die Speichen 8 vorzugsweise schmal sein sollen, steht für die Zu- und Ableitung des Temperiermediums hier nur eine kleine Bohrung zur Verfügung. Um trotzdem eine ausreichende Temperierwirkung erzielen zu können, ist eine hohe Strömungsgeschwindigkeit des Temperiermediums erforderlich, welche durch einen entsprechenden Druck in der Zuleitung ohne Weiteres erzeugt werden kann. Im Falle von Luft sind Drücke (Überdruck) unter 6 bar, meistens solche unter 1 bar, ausreichend.

Der Wandbereich A bei der Ausführungsform gemäß Fig. 7, 8 und 9 ist somit ein im Wesentlichen rechteckiger Bereich, durch den der Temperierkanal 2 mäanderförmig verläuft.

Wie in den Ausführungsbeispielen gezeigt wurde, genügt es, den betreffenden peripheren Fließkanal 12 der Extrusionsdüse 60 für die Kunststoffschmelze nur bereichsweise zu temperieren, etwa nur auf einer Seite oder auf einer Seite und der Stirnbegrenzung.

Je mehr Wandbereiche A der Fließkanäle 3 von der Temperaturänderung betroffen sind, umso intensiver reagiert der Schmelzedurchsatz auf eine bestimmte Temperaturänderung, z.B. bewirkt eine Temperaturabsenkung um 5°C in den dargestellten Winkelbereichen an der Fließkanalwandung eine Verminderung der Wanddicken (hier PVC) in den zuordenbaren Profilbereichen um etwa 0,1 mm. Wirkt sich die Temperaturabsenkung um 5°C auf beide Seiten und die Stirnbegrenzung des Fließkanals 3 aus, so vermindert sich die Wanddicke um etwa 0,15 mm.

Die Temperierkanäle 2 müssen nicht in der Austrittsplatte 1 angeordnet sein, wie z.T. beschrieben, sondern können auch in weiter stromaufwärts befindlichen Düsenplatten 1B vorgesehen werden. Dabei ist es zweckmäßig, die Temperierkanäle 2 an beiden Enden abzudichten, wodurch eine zusätzliche Auslassbohrung vorgesehen werden muss. Da bevorzugt nur die Zuleitungen 9 für die Steuerung der Temperierintensität herangezogen werden, können mehrere Ableitungen zusammengefasst und in einer einzigen Bohrung oder Ausfräsung in der Trennebene nach außen geführt werden.

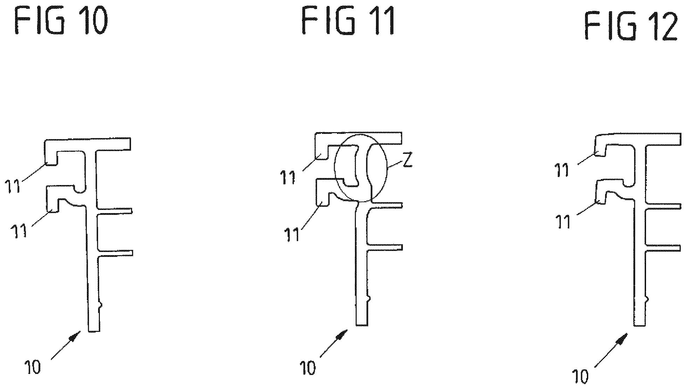

In den Fig. 10 bis 12 ist jeweils ein Ausschnitt aus dem Kunststoffprofil 10 mit unterschiedlich dick ausgeformten Wanddicken dargestellt, wobei Fig. 10 das Kunststoffprofil 10 mit korrekten Wandstärken aller Profilsektionen 11 zeigt, die entstehen, wenn alle Einflussfaktoren, insbesondere die Extruderparameter und die Fließparameter die korrekten Größen aufweisen.

In Fig. 11 sind typische Verformungen schematisch dargestellt, die entstehen, wenn im Bereich der beiden einwandigen Haken 11 die Schmelze vorschiebt, d.h. wenn hier die Fließgeschwindigkeit am Düsenaustritt und damit der örtliche Durchsatz relativ zur Abzugsgeschwindigkeit zu hoch ist. Die überschüssige Schmelze wird am Eintritt der Trockenkalibrierung zur Hohlkammer hin verdrängt und führt zu der "wellenförmigen" Form der vertikalen Profilwand (siehe Bezugszeichen Z in Fig. 11).

Sind im vorliegenden Fall auch die Wanddicken im Bereich der Hohlkammern zu dick, so lässt sich das Kunststoffprofil 10 mit bekannten Maßnahmen in die korrekte Form bringen: Die Abzugsgeschwindigkeit des Kunststoffprofils 10 wird relativ zum Durchsatz der Kunststoffschmelze erhöht. Im gleichen Maße vermindern sich alle Wanddicken, und das Vortreiben der Haken wird vermindert bzw. gänzlich beseitigt.

Sind hingegen die Wanddicken in den Hohlkammern korrekt oder sogar an der unteren Toleranzgrenze, so kann der Geometriefehler durch Anwendung einer der Ausführungsformen korrigiert werden: Durch die Temperierkanäle 2, die den überfüllten Haken 11 (d.h. einer einwandiger Profilsektion) zugeordnet sind, wird Kühlluft als Temperiermedium geblasen. Durch die Veränderung der Strömungseigenschaften der Kunststoffschmelze in diesem räumlichen begrenzten Bereich wird nur die Wanddicke des Hakens 11 vermindert. Das Verdrängen der überschüssigen Kunststoffschmelze zur Hohlkammer hin wird verhindert, und die vertikale Wand erhält die gewünschte gerade Form, ohne dass hier auch die Wanddicke vermindert wird.

Durch die beschriebenen Ausführungsformen ist es möglich, die Wanddicke in unterschiedlichen Profilsektionen 11, 13 weitgehend unabhängig voneinander während der Profilextrusion einzustellen und jeweils für sich zu optimieren. Das Ergebnis sind dimensionsrichtige Kunststoffprofile 10, weniger Ausschuss und Kunststoffprofile 10 nahe an der unteren Metergewichtstoleranz, weil unvermeidbare Wanddickenschwankungen an bestimmten Stellen gezielt ausgeglichen werden können.

In Fig. 12 ist der Querschnitt des Ausschnitts des Kunststoffprofils 10 aus der Fig. 10 dargestellt, wobei im Bereich der beiden Haken 11 zu wenig Material vorhanden ist. Die Wanddicken sind zu dünn, die Flächen verzogen und die Kanten unzureichend ausgeprägt. Funktionsmaße werden nicht eingehalten. Der Ausschnitt aus dem Kunststoffprofil 10 ist nicht maßgetreu.

Wird die Extrusionsgeschwindigkeit analog zum oben beschriebenen Vorgehen abgesenkt, werden zwar die Hakenbereiche 11 wieder aufgefüllt, gleichzeitig werden aber auch alle übrigen Wanddicken erhöht. Infolge des höheren Metergewichtes wäre diese Extrusion nicht wirtschaftlich.

Mit den beschriebenen Ausführungsformen lässt sich die Wanddicke im Bereich der Haken 11 erhöhen, ohne dass alle übrigen Wanddicken erhöht werden: Die Temperaturkanäle 2 werden nunmehr als Heizkanäle eingesetzt. Die analog zu oben zugeführte Luft wird auf eine Temperatur von ca. 300 bis 500°C vorgewärmt. Durch diese Temperaturerhöhung werden räumlich begrenzte Bereiche in den Wandungen der Fließkanäle 12 für die Kunststoffschmelze gezielt erhitzt.

Diese erhöhte Temperatur der Wandung der Fließkanäle 12 vermindert den Fließwiderstand der Kunststoffschmelze und die Strömungsgeschwindigkeit erhöht sich nur in jenen Bereichen, in denen eine erhöhte Temperatur wirksam ist. Als Ergebnis werden wiederum dimensionsrichtige Kunststoffprofile 10 erhalten, es fällt weniger Ausschuss an und Kunststoffprofile 10 sind nahe an der unteren Metergewichtstoleranz, weil unvermeidbare Wanddickenschwankungen an bestimmten Stellen gezielt ausgeglichen werden können.

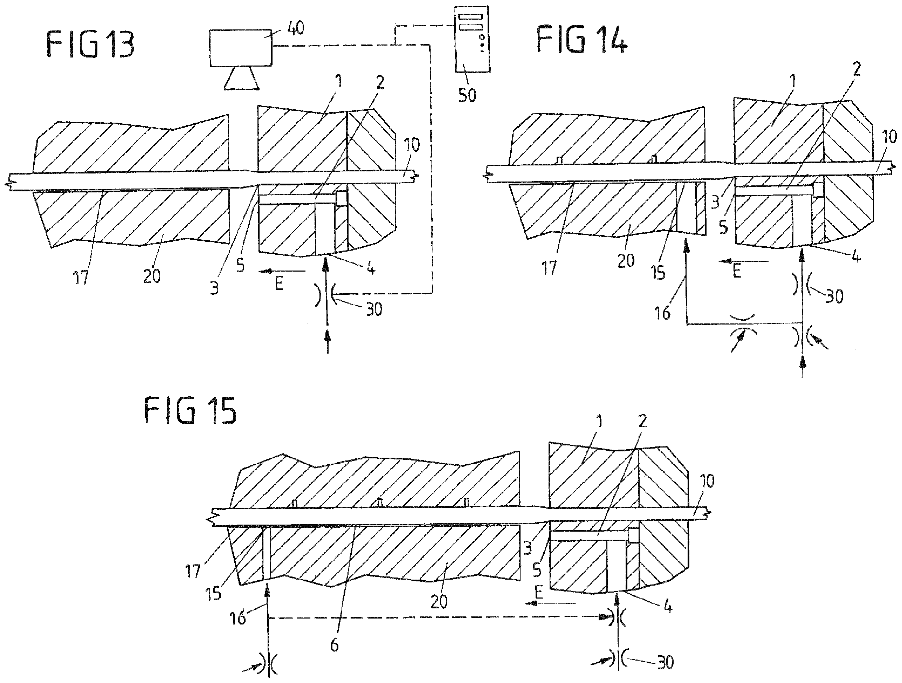

Fig. 13 zeigt aussschnittsweise die Extrusion eines Kunststoffprofils 10, wobei die Extrusionsrichtung E durch einen Pfeil angegeben ist.

Links ist der Einlaufbereich der Trockenkalibrierung 20, rechts der Auslaufbereich der Extrusionsdüse 60 mit der Austrittsplatte 1 dargestellt. Das Kunststoffmaterial bewegt sich durch den Fließkanal 3 der Extrusionsdüse 60, dann kurz frei im Raum, und links gelangt sie in die Trockenkalibrierung 2.

Gemäß üblicher Extrusionsparameter springt der Kunststoffschmelzestrang nach dem Verlassen der Extrusionsdüse 60 um ca. 20% auf (d.h. das extrudierte Kunststoffprofil 10 weitet sich aus, wie in Fig. 13, 14 und 15 schematisch dargestellt ist), was auf die im Vergleich zur mittleren Strömungsgeschwindigkeit in der Extrusionsdüse 60 langsamere Abzugsgeschwindigkeit zurückzuführen ist.

In der Austrittsplatte 1A ist ein Temperierkanal 2 zur lokalen Beeinflussung der Wanddicke des Kunststoffschmelzestrangs 10 dargestellt. In diesem Beispiel wird der Temperierkanal 2 mit Luft bei Raumtemperatur beaufschlagt; der Temperierkanal 2 wird also zum Kühlen verwendet. Über eine Drosselvorrichtung 30, z.B. einen manuell betätigten Hahn, kann der Luftdurchsatz durch den Temperierkanal 2 eingestellt werden. Bei geschlossener Drosselvorrichtung 30 strömt keine Luft. Die Wandung des Fließkanals 3 für den Kunststoffschmelzestrang 10 wird aktiv nicht gekühlt. Dabei stellt sich in der Extrusionsdüse 30 ein Temperaturgleichgewicht ein und der örtliche Schmelzedurchsatz im dargestellten Bereich erreicht sein Maximum.

Führt dieses Maximum zu einer Überfüllung im Kalibratoreinlauf, erkennbar daran, dass der dargestellte Luftspalt 17 kleiner als etwa 0,1 mm wird und sich die Schmelze im Zwischenraum zwischen Extrusionsdüse 60 und der Trockenkalibrierung 20 zurück staut und sich charakteristisch "ausbaucht", so kann durch allmähliches Öffnen der Drosselvorrichtung 30, im einfachsten Fall per Hand, sukzessive die Kühlwirkung erhöht werden, was unmittelbar eine Verringerung des Schmelzedurchsatzes bewirkt.

Bei den hier beschriebenen Beispielen und Ausführungsformen bzw. Dimensionen beträgt die Ansprechzeit etwa 2 bis 10 Sekunden, längstens ca. 1 Minute, d.h., die Auswirkung einer Verstellung der Temperierung kann sehr rasch beobachtet werden und auch das neue Temperaturgleichgewicht der Extrusionsdüse 60 stellt sich vergleichsweise rasch ein. Ist eine passende Einstellung gefunden, also der örtliche Durchsatz im jeweiligen Segment an den Sollbereich herangeführt, verläuft die Produktion über einen langen Zeitraum stabil, solange keine Störgrößen auftreten.

Im Prinzip sind mehr oder weniger alle bekannten Regelungsverfahren verwendbar. Die Wanddicke und / oder der Füllgrad in einer bestimmten Profilsektion 11, ist die Regelgröße und die Eingangsgrößen der Temperiervorrichtung 2, z.B. die Stellung des Drosselventils in der Drosselvorrichtung 30 und / oder die Temperatur des Temperiermediums sind die Stellgrößen. Die Stellgrößen wirken dann auf die Temperatur der Kanalwand und damit auf den Durchsatz oder die Strömungsgeschwindigkeit.

In Fig. 13 ist eine Temperiervorrichtung 2 dargestellt, bei der im einfachsten Fall durch händisches Verstellen einer Drosselvorrichtung 30 die Temperatur in der Fließkanalwandung, d.h. dem Wandbereich A, verändert werden kann.

Hierzu wird die Wanddicke des Kunststoffprofils 10 durch Augenschein beobachtet oder durch eine geeignete Messvorrichtung 40 gemessen. Die Durchflussdrossel 30 wird per Hand so eingestellt, dass die Profilsektion 11 die gewünschte Dicke aufweist. Ohne kontinuierlicher Beobachtung oder Messung, also auch ohne weitere Verstellung der Durchflussdrossel, kann dann über einen längeren Zeitraum extrudiert werden.

Wird diese Anordnung mit einer Regelungsvorrichtung 50 (z.B. einem Regler oder Rechner) erweitert, so kann ein automatischer Regelkreis gebildet werden. Die Messvorrichtung 40 misst ein charakteristisches Maß (Wanddicke, Luftspalt und/oder Ausbauchung etc.). Weicht dieses Maß vom Sollmaß ab, so bewirkt die Regelungsvorrichtung 50 eine Verstellung der Durchflussdrossel. Messung und Verstellung erfolgen laufend und selbsttätig, man spricht daher von einer Regelung.

Alternativ kann anstelle des Durchsatzes des Temperiermediums auch dessen Temperatur verstellt werden.

Wird die Wanddicke elektronisch erfasst, so können geeignete Algorithmen digital eingebunden werden und die Stellgrößen entsprechend beaufschlagt werden. Insgesamt ist hierbei aber ein gewisser Aufwand notwendig, da Messvorrichtungen 40 für Wanddicken, elektrisch ansteuerbare Verstellglieder etc. typischerweise für 4 bis 8 Profilsektionen benötigt werden.

Dabei müssen enge Prozessgrenzen eingehalten werden. Wird nur an einer Stelle kurzzeitig die "maximal verträgliche" Wanddicke überschritten, so führt das unweigerlich zu einem Abriss des Kunststoffprofils 10. Bis zum neuerlichen Anfahren und dem Erreichen aller Qualitätsparameter können mehrere Stunden Arbeit erforderlich sein.

Die Regelgröße Wanddicke kann auf unterschiedliche Arten erfasst werden: Eine direkte Messung der Wanddicke kann durch eine Ultraschall-, optische bzw. Lasermessung erfolgen. Des Weiteren kann auch der Abstand (Luftspalt) zwischen Kunststoffprofil 10 und Kalibratorwandung als Messgröße herangezogen werden, wofür ebenfalls die genannten Messverfahren eingesetzt werden können. Die Messverfahren können auch in Kombination miteinander verwendet werden.

Als vergleichsweise einfach erzeugbares Messsignal kann auch ein Differenzdruck, z.B. der Rückstaudruck bei Beaufschlagung des Luftspaltes mit einem bestimmten Ausgangsdruck, verwendet werden. Das Messsignal, der Rückstaudruck, ändert sich mit der Spaltweite (siehe z.B. Fig. 14), welche zum Abströmen des Temperiermediums (z.B. Luft) zur Verfügung steht: Liegt das Material unmittelbar an einer Auslassöffnung 15 für die Messluft an, wird diese verschlossen und der Rückstaudruck erreicht sein Maximum. Wird der Spalt größer, sinkt der Staudruck.

Auch eine mechanische Messung ist gut als Messgröße geeignet: Ein Messtaster liegt an der Oberfläche des Kunststoffprofils 10 an und misst Wanddickenschwankungen. - Es ist im Prinzip gar nicht notwendig, exakte Zahlenwerte für die Wanddicke zu kennen, letztendlich ist es nur wichtig, einen als zulässig bzw. optimal definierten Zustand durch die Regelung beizubehalten.

Das Messen der Wanddicke kann im Prinzip an beliebigen Stellen, irgendwo stromabwärts der Extrusionsdüse 30, erfolgen:
- Erfolgt die Messung im Zwischenraum zwischen Extrusionsdüse 60 und der Trockenkalibrierung 20 oder im Einlaufbereich der ersten Trockenkalibrierung 20, so ist das endgültige Geschwindigkeitsprofil, also die konstante Geschwindigkeit aller Schmelzeteilchen entsprechend der Abzugsgeschwindigkeit noch nicht voll ausgebildet und es liegen lokal noch größere Abweichungen vor, das heißt insbesondere, dass z.B. einwandige Profilsektionen 11 (z.B. Hakensektionen) charakteristische Ausbauchungen bilden und dass beim Einstellen der Fluchtung von Extrusionsdüse 60 und Trockenkalibrierung 20 diese Ausbauchung vergleichsweise große Verlagerungen oder Formänderungen erfahren kann. Obwohl an einer derartigen Stelle keine gute Übereinstimmung mit der Profilgeometrie vorliegt, kann diese Ausbauchung ein geeignetes Messsignal liefern, welches als Regelgröße verwendet werden kann.
- Nach dem Vorliegen des Sollzustandes durch das Einstellen diverser Parameter soll dieser Zustand durch die Regelung lediglich aufrecht erhalten bleiben. D.h., wird die Ausbauchung kleiner, ist dies ein Zeichen für eine kleinere Wanddicke und es soll durch Erhöhen des lokalen Durchsatzes dagegen geregelt werden. D.h. aber auch, wenn manuelle oder automatische Verstellungen vorgenommen werden, z.B. zum Einstellen der Fluchtung zwischen Düse und Kalibrierung 20, muss vorübergehend die Regelung abgeschaltet werden, um unerwünschte Reaktionen zu vermeiden. Nach dem Aktivieren der Regelung muss diese lediglich den momentan aktuellen Zustand aufrechterhalten, und nicht bestimmte Absolutwerte annähern.

- Erfolgt die Messung der Regelgröße im Bereich der Trockenkalibrierung 20, stromabwärts nach dem Einlaufbereich, entspricht die Profilform weitgehend dem Endprodukt. Absolutmaße der Wanddicke oder des Spaltes korrelieren exakt mit der Profilgeometrie, daher eignen sich diese optimal als Regelgröße. Erfolgt die Messung indirekt über den Rückstaudruck, so erfolgt eine Überlagerung mit dem "angelegten Vakuum in der Kalibrierung". Das bedeutet auch hier, dass der Rückstaudruck nicht als Absolutgröße angenähert werden soll/darf, sondern dass die Regelung nur zum Aufrechterhalten eines Sollzustandes eingesetzt werden kann.
- Die Messung der Regelgröße kann prinzipiell auch am Ende des Extrusionsprozesses, also nach dem Abkühlen des Kunststoffprofils 10 und dem Erreichen der Endkontur erfolgen, z.B. nach dem Ablängen der Profilstangen (z.B. durch Abtasten der Stirnflächen oder Einscannen der Stirnflächen oder Messung der Außenkontur des gesamten Profils mittels Laser-Messverfahren und anderen Verfahren). Nachteilig hierbei ist jedoch der große zeitliche Abstand zwischen Verstellen und Wirksamwerden in der Extrusionsdüse 60 und Messung der Regelgröße (praktisch ca. 5 bis 10 min), so dass zwischenzeitliche Fehleinstellungen nicht ausgeregelt werden können und dass im Extremfall Profilabrisse in Kauf genommen werden müssen.

In Zusammenhang mit Fig. 14 wird eine einfache, selbstregelnde Anordnung beschrieben. Das Besondere hierbei ist, dass weitgehend, oder sogar gänzlich, auf eine elektronische Erfassung der Messgröße und/oder auf einen elektronischen Regelkreis und/oder auf eine elektronische Ansteuerung der Stellglieder und dem damit verbunden Installationsaufwand verzichtet werden kann.

Die Messgröße ist der Rückstaudruck im einlaufseitigen Luftspalt 17 der Trockenkalibrierung 20. Die Wanddicke der Profilsektion 11 wird indirekt erfasst. Wird der Spalt 17 zwischen Kunststoffprofil 10 und der Kalibratorwand mit geringem Überdruck (weniger als 1 bar, meistens weniger als 0,2 bar) beaufschlagt, so entsteht ein Rückstaudruck. Dieser Rückstaudruck ist umso größer, je kleiner der Spalt ist, also je größer die Wanddicke des Kunststoffprofils 10 ist. Mit diesem Rückstaudruck wird ein Stellglied beaufschlagt, welches den Durchsatz des Temperiermediums im gewünschten Sinn ändert.

Als Stellglied kann ein Schieber dienen, der die Strömungsgeschwindigkeit des Temperiermediums beeinflusst. Die Extrusionsdüse 60 ist in diesem Beispiel so abgestimmt, dass im Ausgangszustand die Sollwanddicke dann erreicht wird, wenn der Temperierkanal 2 mit einer durch den Schieber teilweise gedrosselten Strömungsgeschwindigkeit durchströmt wird. Damit steht ein hinreichend großer Regelspielraum zur Verfügung.

Sowohl der Temperierkanal 2 als auch die Auslassöffnung 15 für die Messluft werden mit einem Luftstrom 16 beaufschlagt. Zunächst wird durch manuelles Verstellen der Drosselvorrichtung 30 die gewünschte Dicke eingestellt, dann wird die Regelung aktiviert. Sobald sich der Druck in der Messleitung ändert, wird die Drossel 30 infolge des Druckes bzw. direkt durch diesen Druck solange verstellt, bis wieder der gleiche Druck wie bei Aktivierung der Regelung vorliegt. Eine aufwändige Regelung mit einem Rechner ist nicht erforderlich. Die Drosselvorrichtung 30 kann für diesen Zweck ähnlich wie ein Servoventil aufgebaut sein. Für die Ansteuerung ist kein elektrisches Signal notwendig, die Verstellung erfolgt durch das strömende Medium selbst.

Als Messsignal dient indirekt der Rückstaudruck, je größer der Spalt, umso kleiner ist der Staudruck.

Im vorliegenden Fall soll bei dicker werdender Wanddicke, also kleiner werdendem Spalt an der Messstelle und höher werdendem Rückstaudruck, die Profilsektion 11 in der Austrittsplatte 1 der Extrusionsdüse 60 gekühlt werden. D.h., der Durchsatz der Kühlluft als Temperaturmedium ist zu erhöhen, das Stellglied muss Öffnen.

Ist im umgekehrten Fall die Wanddicke zu klein, so muss dass Stellglied als Reaktion auf den kleiner werdenden Rückstaudruck den Durchsatz vermindern, also Schließen.

Die Ausgangssituation des Stellgliedes (Drosselvorrichtung 30) kann manuell eingestellt werden, z.B. über eine Stellschraube, welche zwischen der automatischen Verstellung und dem eigentlichen Stellglied, dem Schieber, angeordnet ist.

Die skizzierte Regelstrecke kann mit einfachsten Hilfsmitteln bezüglich des Ansprechverhaltens angepasst werden. Je stärkere Ausschläge gewünscht werden, umso höher muss (bei Raumtemperatur) der maximal zur Verfügung stehende Eingangsdruck bzw. die Strömungsgeschwindigkeit im Temperierkanal 2 sein. Je direkter die Regelstrecke ansprechen soll, umso höher muss der Druck des abgezweigten Mess-Luftstromes sein.

Verschiedene Regelstrecken können parallel von einer einzigen Luftversorgung in Form eines Gebläses beaufschlagt werden. Weil bereits ein vergleichsweise kleines Gebläse (Motorleistung 300 W, Maximaldruck +0,2 bar (zum Vergleich Haushaltsstaubsauger: Motorleistung 1,8 kW, maximaler Saugdruck -0,2bar)) ausreicht, um bis zu 10 Segmente ansteuern zu können, wobei auch dann noch keinesfalls die gesamte Gebläseleistung durch die Temperierkanäle 2 strömen muss, ist eine gegenseitige Beeinflussung nicht zu befürchten bzw. lediglich tolerierbar klein.

Bei der in Fig. 15 dargestellten Ausführungsvariante einer einfachen Regelung dient wiederum der Rückstaudruck bei Beaufschlagung eines Luftspaltes 17 in der Trockenkalibrierung 20 als Messgröße. Die Messstelle 15, die mit dem Messluftstrom 16 beaufschlagt wird, ist jetzt etwa im Mittelbereich der ersten Trockenkalibrierung 20 (in Extrusionsrichtung E gezählt). Dies hat den Vorteil, dass der Rückstaudruck nicht durch die Relativposition von Trockenkalibrierung 20 zur Extrusionsdüse 60 beeinflusst wird, sondern lediglich durch das Vakuum in der Trockenkalibrierung 20, welches üblicherweise ohnehin auf einem konstanten Niveau gehalten wird.

Auch hierbei kann die korrekte Ausformung des Profilsegmentes 11 zunächst manuell eingestellt werden. Diesem Zustand entspricht in der Folge ein bestimmter Rückstaudruck. Wird die Regelung dann aktiviert, wird dieser Rückstaudruck automatisch beibehalten.

Tritt eine Abweichung vom Sollwert auf, weil sich infolge einer Veränderung der Wanddicke der Profilsektion 11 der Luftspalt verändert, so wird ein Stellglied, in diesem Beispiel ein Drosselorgan 30, beaufschlagt, wodurch der Luftdurchsatz durch den Temperierkanal 2 verändert wird. Der Strömungsquerschnitt im Drosselorgan 30 wird solange vergrößert bzw. verkleinert, bis der Rückstaudruck wiederum auf dem Ausgangsniveau beim Aktivieren der Regelung ist.

Diese Erfindung ist nicht auf Fensterprofile aus PVC oder sonstige Profile aus beliebigen Kunststoffen beschränkt.

Selbstverständlich ist eine Anwendung bei anderen Extrusionsprofilen, wie der Rohrextrusion oder Blasfolienextrusion, bei der Extrusion von Flachprodukten mit Breitschlitzdüsen (Flachfolien oder -platten) und anderen Extrusionsvorgängen sinnvoll. Bei diversen Extrusionsverfahren werden Dickenverstellungen durch mechanisches Verstellen des Austrittsspaltes, der Spalthöhe, oder der Spalthöhe in einem etwas stromaufwärts gelegenen Bereich durchgeführt, um die Dicke des Extrudates bereichsweise an den Sollwert heranzuführen. Sehr häufig werden hierfür auch Regelungen eingesetzt. Anstelle der verbreiteten mechanischen Verstellung der Spalthöhe in bestimmten Breitensektionen des Extrudates bewirkt auch die Veränderung der Temperatur der Fließkanalwandung in bestimmten Breitensektionen gemäß dieser Erfindung den gewünschten Effekt.

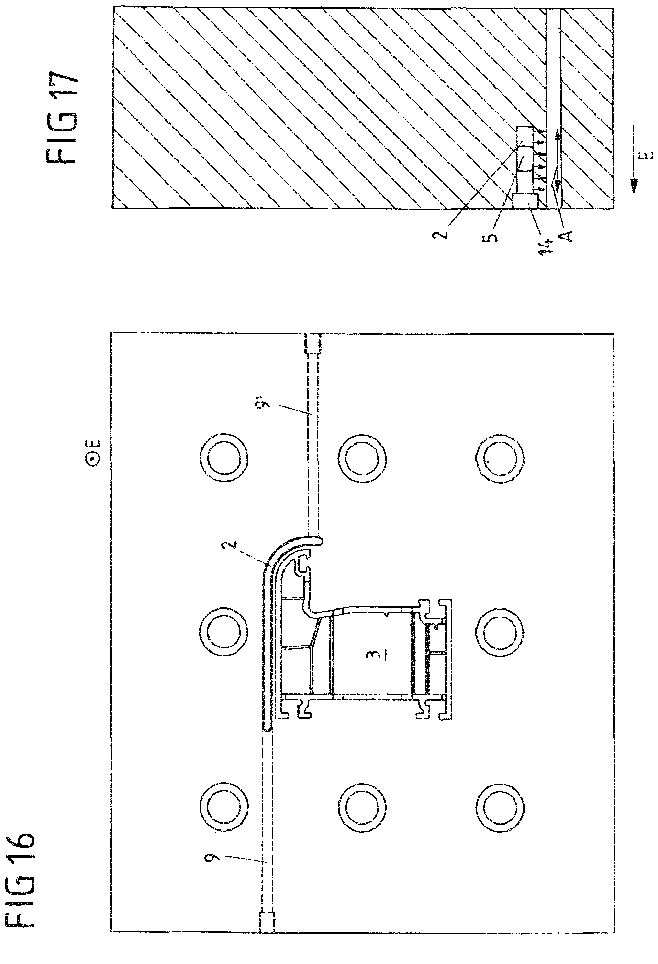

In Fig. 16 und 17 ist eine weitere Ausführungsform einer Extrusionsvorrichtung mit einer lokalen Temperiervorrichtung 2 dargestellt.

Der Unterschied zu den bisher erläuterten Ausführungsformen besteht darin, dass sich der Wandbereich, in dem die lokale Temperierung erfolgt, vorwiegend in die Breite erstreckt und weniger in die Länge (d.h. entlang der in Extrusionsrichtung E). Auch strömt das Temperiermittel nicht in Extrusionsrichtung E, sondern quer zu dieser, also in Plattenebene.

Die Erhöhung der Temperatur im Austrittsbereich der Düse führt zu einer Erhöhung des Glanzes der Oberfläche. Daher ist es vorteilhaft, den Austrittsbereich der Düse über die Düsentemperatur hinaus zu überhitzen.

Bei dieser Ausführungsform überdeckt der zu temperierende Wandbereich des Fließkanals A die gesamte Breite einer Außenwand des Kunststoffprofils 10. Im Unterschied zu den bisher beschriebenen Ausführungsformen weist der Temperierkanal eine größere Erstreckung quer zur Extrusionsrichtung E und eine geringere Erstreckung in Extrusionsrichtung E auf. Der Zweck hierfür ist, dass z.B. eine Temperaturerhöhung des Wandbereiches nicht zu einer sehr deutlichen Erhöhung der Wanddicke führen soll. Es soll vorwiegend nur die äußerste Oberfläche der Schmelze erwärmt werden, denn dadurch erhöht sich auch der Glanz an der Oberfläche des austretenden Profils, was für manche Anwendungen erwünscht ist. Umgekehrt kann auch der Glanz durch eine tiefere Temperatur etwas gesenkt werden. Der Temperierkanal 2 zur Beeinflussung der Fließkanalwandtemperatur ist bei dieser Ausführungsform nur in der Düsenaustrittsplatte 1A angeordnet und weist eine Erstreckung in Extrusionsrichtung, parallel zur Fließkanaloberfläche, im Minimum von etwa 5 mm auf, und als Obergrenze die Dicke der Düsenplatte 1A, bevorzugt ca. 6 bis 10 mm. Der Zu- und Ablauf 9 für das Temperiermedium liegen bevorzugt in einer Ebene parallel zur Plattenebene, das Temperiermedium durchströmt den Temperierkanal im Wesentlichen quer zur Extrusionsrichtung E.

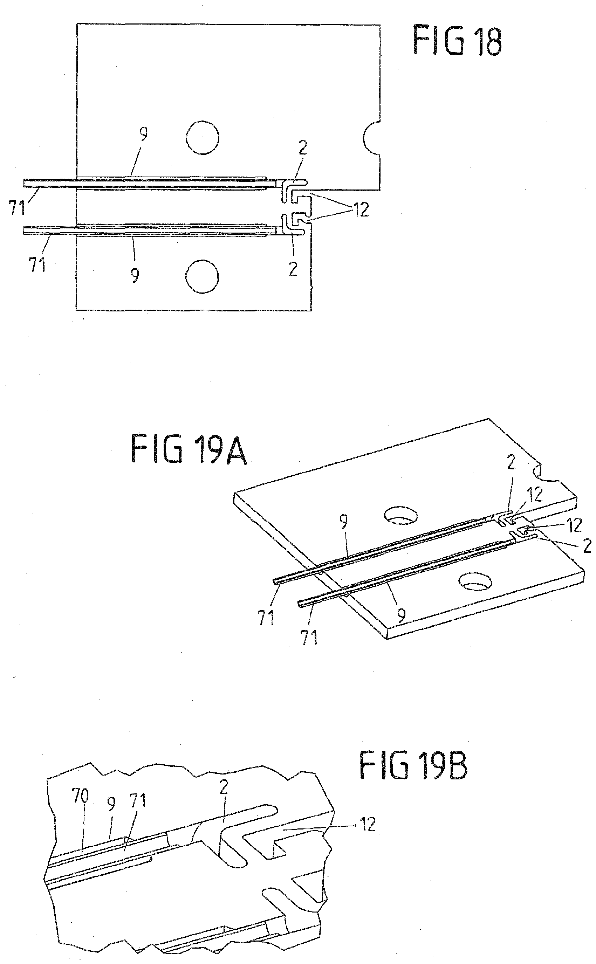

In Fig. 18 ist eine Düsenplatte 1 im Ausschnitt dargestellt, wobei diese mit zwei lokalen Temperiervorrichtungen 2 versehen sind, wie dies im Zusammenhang mit den anderen Ausführungsbeispielen bereits beschrieben wurde. In dem dargestellten Schnitt sind zwei Zuläufe 9 für das Temperiermedium zu den lokalen Temperiervorrichtungen 2 dargestellt. In Fig. 19A ist der Schnitt gemäß Fig. 18 in einer perspektivischen Ansicht dargestellt. In Fig. 19B ein vergrößerter Ausschnit aus Fig. 19A im Bereich der lokalen Temperiervorrichtung 2 dargestellt.

Bei der erfindungsgemässen Düsenplatte 1, weisen die Zuläufe 9 für das Temperiermedium eine thermische Isoliervorrichtung 70 auf, die für eine erhöhten Wärmeübergangswiderstand entlang des Zulaufs 9 sorgt. Hier weist die thermische Isoliervorrichtung 70 einen Luftspalt auf. Dazu wird die Bohrung für den eigentlichen Zulauf 9 etwas größer dimensioniert, so dass ein temperaturbeständiger Kunststoffschlauch oder ein Metallrohr als Fluidleitung 71 in der Bohrung angeordnet werden kann. Die Fluidleitung 71 hat einen geringeren Durchmesser als die umgebende Bohrung, so dass ein Luftspalt um die Fluidleitung 71 entsteht. Das Temperiermedium fließt durch die Fluidleitung 71 zur lokalen Temperiervorrichtung 2 (siehe insbesondere Fig. 19B).

Durch den Luftspalt 70 wird die Fluidleitung 71 thermisch gegen die Umgebung, d.h. die Düsenplatte isoliert. Dadurch wird der Wärmeaustausch zwischen Temperierflüssigkeit und der Düsenplatte erschwert, so dass die Temperierflüssigkeit geringeren Temperaturverlusten ausgesetzt wird. An der eigentlichen Wirkstelle, d.h. der lokalen Temperiervorrichtung 2 liegt ein höherer Temperaturgradient an, als wenn keine Isoliervorrichtung 70 verwendet wird. Damit lässt sich die Temperaturänderung an der Düsenwand effizient steuern und regeln.

Wird die Temperatur und / oder die Strömungsgeschwindigkeit verändert, so verändert sich das Temperaturfeld der Düsenplatte 1. Dies kann z.B. zwischen 5 bis 30 Minutuen dauern, was relativ lange ist. Durch die thermische Isoliervorrichtung 70 wird die Düsenplatte 1 gegen thermische Einflüsse durch das Temperierfluid besser isoliert.

In den Fig. 18, 19A und 19B wird die thermisiche Isoliervorrichtung 70 durch einen Luftspalt gebildet. In anderen Ausführungsformen kann die thermische Isoliervorrichtung auch anders ausgeführt werden. So ist es möglich, einen temperaturbeschichteten Kunststoffschlauch als Fluidleitung 71 ohne Luftspalt in eine Bohrung des Zulaufs 9 zu legen. Wenn die Wandung dick genug ist und / oder das Kunststoffmaterial eine hinreichend schlechte Wärmeleitung aufweist, so kommt es auf den Luftspalt nicht an.

Grundsätzlich können auch mehrere Wärmedämmmittel verwendet werden, z.B. ein Luftspalt 70 in dem ein isoliertes Metallrohr angeordnet ist.

Diese Ausführungsform mit einer thermischen Isoliervorrichtung 70 kann mit allen anderen beschriebenen Ausführungsformen eingesetzt werden.

### Bezugszeichenliste

- 1: Düsenplatte (z.B. Teil eines Extrusionswerkzeugs)
- 1A: Austrittsplatte (erste Platte)
- 1B: zweite Düsenplatte
- 2: lokale Temperiervorrichtung (z.B. Temperierkanal, elektrisches Thermoelement)
- 3: Fließkanal für Kunststoffschmelze
- 4: Einlassöffnung für Temperiermedium
- 5: Auslassöffnung für Temperiermedium
- 6: Luftspalt
- 7: Dornteile
- 8: Stege
- 9: Zulauf/Ablauf für Temperiermedium

- 10: extrudiertes Kunststoffprofil
- 11: einwandige Profilsektion
- 12: Fließkanal für einwandige Profilsektion
- 13: Innenwand eines Hohlkammerprofils
- 14: Verschlussstopfen für Temperierkanal
- 15: Auslassöffnung für Messluft
- 16: Zuleitung für Messluft
- 17: Luftspalt in Trockenkalibrierung

- 20: Trockenkalibrierung
- 30: Drosselvorrichtung
- 40: Messvorrichtung
- 50: Regelungsvorrichtung (Rechner)
- 60: Extrusionsdüse
- 70: Thermische Isoliervorrichtung
- 71: Fluidrohr
- A: zu temperierender Wandbereich des Fließkanals
- Z: Detail einer Profilsektion

## Patentansprüche

1. Extrusionsvorrichtung für die Extrusion von Kunststoffprofilen (10) mit abstehenden, einwandigen Profilsektionen, nämlich einer Düsenplatte (1) oder mehreren Düsenplatten (1,1A, 1B), umfassend
mindestens einen Kunststoffschmelze-Fließkanal (12) für die abstehende, einwandige Profilsektion (11), wobei mindestens ein Wandbereich (A) des Kunststoffschmelze-Fließkanals (12) für die abstehende einwandige Profilsektion (11) mit einer lokalen Temperiervorrichtung (2) zur Einstellung der Strömungsgeschwindigkeit der Kunststoffschmelze gezielt temperierbar ist, wobei
der zu temperierende mindestens eine Wandbereich (A) eine Längendimension von etwa 20 bis 80 mm und / oder eine Breitendimension von etwa 3 bis 20 mm aufweist und die lokale Temperiervorrichtung (2) in räumlicher Nähe zum mindestens einen Wandbereich (A) des Kunststoffschmelze-Fließkanals (12) für die abstehende, einwandige Profilsektion (11) angeordnet ist,
**dadurch gekennzeichnet, dass**
für mindestens einen Teilbereich in der einen Düsenplatte (1) oder in den mehreren Düsenplatten (1, 1A, 1B) für Zuläufe (9) eines Temperiermediums eine thermische Isoliervorrichtung (70) vorgesehen ist, wobei die Isoliervorrichtung (70) einen Luftspalt (71) und / oder ein Isoliermaterial aufweist.

2. Extrusionsvorrichtung nach Anspruch 1, **dadurch gekennzeichnet, dass** die lokale Temperiervorrichtung (2) in räumlicher Nähe zum mindestens einen Wandbereich (A) des mindestens einen Fließkanals (3) für Kunststoffschmelze angeordnet ist, insbesondere in der Nähe der Austrittsöffnung einer Extrusionsdüse (60).

3. Extrusionsvorrichtung nach Anspruch 1 oder 2, **dadurch gekennzeichnet, dass** der zu temperierende mindestens eine Wandbereich (A) zwischen 0 bis 100 mm stromaufwärts vom Austritt der Extrusionsdüse (60) angeordnet ist und / oder dass der mindestens eine zu temperierende Wandbereich (A) in der Düsenaustrittsplatte (1A) unmittelbar stromaufwärts vom Austritt der Extrusionsdüse (60) angeordnet ist und der mindestens eine Wandbereich (A) eine Dimension in Extrusionsrichtung von 5 bis 20 mm, bevorzugt 6 bis 10 mm, und eine Dimension quer zur Extrusionsrichtung von etwa 20 bis 150 mm, bevorzugt über die gesamte Breite der zugeordneten Profilfläche, aufweist.

4. Extrusionsvorrichtung nach mindestens einem der vorhergehenden Ansprüche, **dadurch gekennzeichnet, dass** die lokale Temperiervorrichtung (2) mindestens einen Temperierkanal, mindestens ein elektrisches Heizmittel, insbesondere eine Induktions- oder Widerstandsheizung und / oder mindestens ein thermoelektrisches Element aufweist, wobei insbesondere der mindestens eine Temperierkanal von einem Temperiermedium, insbesondere Raumluft, kalter und / oder erhitzter Luft, einem Gas und / oder einer Flüssigkeit durchströmbar ist, wobei die Durchströmung mit einer Flüssigkeit insbesondere in einem geschlossenen Kreislauf und die Durchströmung mit einem Gas in einem offenen Kreislauf erfolgt.

5. Extrusionsvorrichtung nach Anspruch 4, **dadurch gekennzeichnet, dass** der mindestens ein Temperierkanal eine Breitenerstreckung entsprechend der Breitendimension des zugeordneten Wandbereichs (A) des Kunststoffschmelze-Fließkanals (12) für die abstehende, einwandige Profilsektion (11) aufweist, und / oder dass die Spalthöhe des mindestens einen Temperierkanals zwischen 0,3 bis 5 mm, bevorzugt bis 2 mm, beträgt.

6. Extrusionsvorrichtung nach mindestens einem der vorhergehenden Ansprüche, **dadurch gekennzeichnet dass** die lokale Temperiervorrichtung (2) gegenüber der Extrusionsdüse (60), nämlich einer Düsenplatte (1) oder mehreren Düsenplatten (1, 1A, 1B) mit einem Luftspalt (6) und / oder mittels einer wärmedämmenden Zwischenlage wärmetechnisch isoliert ist, so dass an der Oberfläche des Kunststoffschmelze-Fließkanals (12) für die abstehende, einwandige Profilsektion (11) höhere Temperaturdifferenzen wirksam werden.

7. Extrusionsvorrichtung nach mindestens einem der vorhergehenden Ansprüche, **gekennzeichnet durch** die Kopplung mit einer Steuer- oder Regelvorrichtung (50) zur Ansteuerung der lokalen Temperiervorrichtung (2) zur Beeinflussung einer Wanddicke des Kunststoffprofils (10), wobei mindestens eine Messgröße die Wanddicke, die Spaltbreite in einer Kalibrierungsvorrichtung (20), eine räumliche Ausdehnung des Kunststoffprofils (10) nach dem Verlassen der Extrusionsdüse (60) und / oder ein gemessener Rückstaudruck in der Kalibrierungsvorrichtung (20) ist.

8. Extrusionsvorrichtung nach mindestens einem der vorhergehenden Ansprüche, **dadurch gekennzeichnet, dass** die Strömungsgeschwindigkeit, die Durchflussmenge, der Druck und / oder die Temperatur des Temperiermediums, insbesondere Luft, vor dem Einlauf in die Temperiervorrichtung (2) gezielt einstellbar ist.

9. Extrusionsvorrichtung nach mindestens einem der vorhergehenden Ansprüche, **gekennzeichnet durch** eine Steuer- oder Regelvorrichtung (50) zur zeitlichen Veränderung der Temperatur des mindestens einen Wandbereichs (A) des Kunststoffschmelze-Fließkanals (12) für die abstehende, einwandige Profilsektion (11), insbesondere zur Einstellung eines kontrolliert langsamen Temperaturübergangs von 5 bis 15 K/min.

10. Extrusionsvorrichtung nach mindesten einem der vorhergehenden Ansprüche, **gekennzeichnet durch** eine Drosselvorrichtung (30) zur gezielten Einstellung des Durchsatzes des Temperiermediums, wobei die Drosselvorrichtung (30) insbesondere mit einer Steuer- oder Regelvorrichtung koppelbar ist.

11. Extrusionsvorrichtung nach mindestens einem der vorhergehenden Ansprüche, **dadurch gekennzeichnet, dass** die Kunststoffprofile (10) Hohlkammern aufweisen.

12. Extrusionsverfahren von Kunststoffprofilen (10), mit mindestens einem Kunststoffschmelze-Fließkanal (12) für die abstehende einwandige Profilsektion (11), nämlich in einer Düsenplatte (1) oder mehreren Düsenplatten (1, 1A, 1B), für Kunststoffschmelze, wobei die Kunststoffschmelze im mindestens einen Kunststoffschmelze-Fließkanal (12) für die abstehende, einwandige Profilsektion (11) zur Einstellung der Strömungsgeschwindigkeit an mindestens einem Wandbereich (A) des Kunststoffschmelze-Fließkanals (12) für die abstehende, einwandige Profilsektion (11) durch eine lokale Temperiervorrichtung (2) temperierbar ist, wobei der zu temperierende mindestens eine Wandbereich (A) eine Längendimension von etwa 20 bis 80 mm und / oder eine Breitendimension von etwa 3 bis 20 mm aufweist, und die lokale Temperiervorrichtung (2) in räumlicher Nähe zum mindestens einen Wandbereich (A) des Kunststoffschmelze-Fließkanals (12) für die abstehende, einwandige Profilsektion (11) angeordnet ist, und / oder wobei für mindestens einen Teilbereich in der einen Düsenplatte (1) oder in den mehreren Düsenplatten (1, 1A, 1B) für Zuläufe (9) für ein Temperiermedium eine thermische Isoliervorrichtung (70) vorgesehen ist, wobei die Isoliervorrichtung (70) einen Luftspalt (71) und / oder ein Isoliermaterial aufweist.

13. Extrusionsverfahren nach Anspruch 12, **dadurch gekennzeichnet, dass** der mindestens eine Wandbereich (A) des Kunststoffschmelze-Fließkanals (12) für die abstehende, einwandige Profilsektion (11) und / oder des Fließkanals (3) bis zu 30°C oberhalb oder unterhalb der mittleren Temperatur einer Extrusionsdüse (60) temperiert wird und / oder dass mindestens ein Temperierkanal von einem Temperiermedium, insbesondere Luft bei Raumtemperatur, gekühlter und / oder erhitzter Luft, einem Gas und / oder einer Flüssigkeit durchströmbar wird, wobei die Durchströmung mit einer Flüssigkeit insbesondere in einem geschlossenen Kreislauf und die Durchströmung mit einem Gas in einem offenen Kreislauf erfolgt, wobei insbesondere das gekühlte Temperierfluid, insbesondere Gas, eine Temperatur zwischen -50 bis 30°C, insbesondere Raumtemperatur aufweist, wobei insbesondere nur die Austrittszone der Extrusionsdüse (60) temperiert wird.

14. Extrusionsverfahren nach Anspruch 12 oder 13, **gekennzeichnet durch** eine Steuerung oder Regelung der Ansteuerung der lokalen Temperiervorrichtung (2) zur Beeinflussung einer Wanddicke des Kunststoffprofils (10), wobei mindestens eine Messgröße die Wanddicke, die Spaltbreite in einer Kalibrierungsvorrichtung (20), eine räumliche Ausdehnung des Kunststoffprofils (10) nach dem Verlassen der Extrusionsdüse (60) und / oder ein gemessener Rückstaudruck in der Kalibrierungsvorrichtung (20) ist, und / oder dass die Strömungsgeschwindigkeit, die Durchflussmenge, der Druck und / oder die Temperatur des Temperiermediums, insbesondere Luft, vor dem Einlauf in die Temperiervorrichtung (2) gezielt eingestellt wird.

15. Extrusionsverfahren nach mindestnes einem der Ansprüche 12 bis 14, **dadurch gekennzeichnet, dass** die Kunststoffprofile (10) Hohlkammern aufweisen.

## Claims

1. Extrusion device for the extrusion of plastic profiles (10) with projecting, single walled profile sections, namely a nozzle plate (1) or multiple nozzle plates (1, 1A, 1B), comprising
at least one flow channel (12) for plastic melt for the projecting, single walled profile section (11), wherein at least one wall region (A) of the flow channel (12) for plastic melt for the projecting, single walled profile section (11) can be temperature controlled in a targeted manner with a local temperature control device (2) for setting the flow speed of the plastic melt, wherein
the at least one wall region (A) to be temperature controlled has a length dimension of about 20 to 80 mm and/or a width dimension of about 3 to 20 mm and the local temperature control device (2) is arranged in a spatial proximity to the at least one wall region (A) of the flow channel (12) for plastic melt for the projecting, single walled profile section (11),
**characterized in that**
a thermal insulating device (70) is provided for at least one sub region in the nozzle plate (1) or the multiple nozzle plates (1, 1A, 1B) for inlets (9) of a temperature control medium, wherein the insulating device (70) comprises an air gap (71) and/or an insulating material.

2. Extrusion device according to claim 1, **characterized in that** the local temperature control device (2) is arranged in a spatial proximity to the at least one wall region (A) of the at least one flow channel (3) for plastic melt, in particular in proximity of the outlet opening of an extrusion nozzle (60).

3. Extrusion device according to claim 1 or 2, **characterized in that** the at least one wall region (A) to be temperature controlled is arranged between 0 to 100 mm upstream from the outlet of the extrusion nozzle (60) and/or the at least one wall region (A) to be temperature controlled is arranged in the nozzle outlet plate (1A) directly upstream of the outlet of the extrusion nozzle (60) and the at least one wall region (A) has a length dimension in extrusion direction of about 5 to 20 mm, preferably 6 to 10 mm, and a dimension crosswise to the extrusion direction of about 20 to 150 mm, preferably over the complete width of the assigned profile area.

4. Extrusion device according to at least one of the preceding claims, **characterized in that** the local temperature control device (2) comprises at least one temperature control channel, at least one electrical heating means, in particular an induction or resistant heating and/or at least one thermoelectric element, wherein the at least one temperature control channel can be flown through by a temperature control medium, in particular room air, cold and/or heated air, a gas and/or a liquid, wherein the flow through of a liquid occurs in particular in a closed cycle and the flow through of a gas occurs in an open cycle.

5. Extrusion device according to claim 4, **characterized in that** the at least one temperature control channel comprises a width extension according to the width dimension of the assigned wall region (A) of the flow channel (12) for plastic melt for the projecting, single walled profile section (11), and/or that the gap size of the at least one temperature control channel is between 0.3 to 5 mm, preferably up to 2 mm.

6. Extrusion device according to at least one of the preceding claims, **characterized in that** the local temperature control device (2) is insulated thermotechnically in respect to the extrusion nozzle (60), namely a nozzle plate (1) or multiple nozzle plates (1, 1A, 1B), by an air gap (6) or by means of a heat insulating intermediate layer such that higher temperature differences can be effective on the surface of the flow channel (12) for plastic melt for the projecting, single walled profile section (11).

7. Extrusion device according to at least one of the preceding claims **characterized by** the coupling to an operating or control device (50) for controlling the local temperature control device (2) for influencing a wall thickness of the plastic profile (10), wherein at least one measured value is the wall thickness, the gap size in a calibration device (20), a spatial extension of the plastic profile (10) after leaving the extrusion nozzle (60) and/or a measured back pressure in the calibration device (20).

8. Extrusion device according to at least one of the preceding claims, **characterized in that** the flow velocity, the rate of flow, the pressure and/or the temperature of the temperature control medium, in particular air, can be set in a targeted manner before being fed into the temperature control device (2).

9. Extrusion device according to at least one of the preceding claims, **characterized by** an operating or control device (50) for a timely change of the temperature of the at least one wall region (A) of the flow channel (12) for plastic melt for the projecting, single walled profile section (11), in particular for setting a temperature transition of 5 to 15 K/min in a controlled slow manner.

10. Extrusion device according to at least one of the preceding claims, **characterized by** a throttle device (30) for setting the throughput of the temperature control medium in a targeted manner, wherein the throttle device (30) can be coupled in particular to an operating or control device.

11. Extrusion device according to at least one of the preceding claims, **characterized in that** the plastic profiles (10) comprise hollow chambers.

12. Extrusion method for plastic profiles (10) with at least one flow channel (12) for plastic melt for the projecting, single walled profile section (11), namely in a nozzle plate (1) or multiple nozzle plates (1, 1A, 1B), for plastic melt, wherein the plastic melt is temperature controlled in the at least one flow channel (12) for plastic melt for the projecting, single walled profile section (11) for setting the flow velocity at at least one wall region (A) of the flow channel (12) for plastic melt by a local temperature control device (2), wherein the at least one wall region (A) to be temperature controlled has a length dimension of about 20 to 80 mm and/or a width dimension of about 3 to 20 mm, and the local temperature control device (2) is arranged in a spatial proximity to the at least one wall region (A) of the flow channel (12) for plastic melt for the projecting, single walled profile section (11), and/or wherein a thermal insulating device (70) is provided for at least one sub region in the nozzle plate (1) or the multiple nozzle plates (1, 1A, 1B) for inlets (9) of a temperature control medium, wherein the insulating device (70) comprises an air gap (71) and/or an insulating material.

13. Extrusion method according to claim 12, **characterized in that** the at least one wall region (A) of the flow channel (12) for plastic melt for the projecting, single walled profile section (11) and/or flow channel (3) is temperature controlled 30°C above or below the medium temperature of an extrusion nozzle (60) and/or the at least one temperature control channel can be flown through by a temperature control medium, in particular air at room temperature, cooled and/or heated air, a gas and/or a liquid, wherein the flow through by a liquid occurs in particular in a closed cycle and the flow through by a gas occurs in an open cycle, wherein the cooled temperature control fluid, in particular gas, has a temperature between -50 to 30°C, in particular room temperature, wherein in particular only the outlet zone of the extrusion nozzle (60) is temperature controlled.

14. Extrusion device according to claim 12 or 13, **characterized by** an operating or control of the controlling the local temperature control device (2) for influencing a wall thickness of the plastic profile (10), wherein at least one measured value is the wall thickness, the gap size in a calibration device (20), a spatial extension of the plastic profile (10) after leaving the extrusion nozzle (60) and/or a measured back pressure in the calibration device (20), and/or wherein the flow velocity, the rate of flow, the pressure and/or the temperature of the temperature control medium, in particular air, is set in a targeted manner before feeding into the temperature control device (2).

15. Extrusion method according to at least one of the claims 12 to 14, **characterized in that** the plastic profiles (10) comprise hollow chambers.

## Revendications

1. Dispositif d'extrusion pour l'extrusion de profilés en matière plastique (10) avec des sections de profilé à une paroi, en saillie, à savoir une plaque de buse (1) ou plusieurs plaques de buse (1, 1A, 1B),
comprenant au moins un canal d'écoulement de fonte de matière plastique (12) pour la section de profilé à une paroi, en saillie (11), dans lequel au moins une zone de paroi (A) du canal d'écoulement de fonte de matière plastique (12) pour la section de profilé (11) à une paroi, en saillie avec un dispositif de régulation de température (2) local peut être régulée en température de manière ciblée pour le réglage de la vitesse d'écoulement de la fonte de matière plastique, dans lequel
l'au moins une zone de paroi (A) à réguler en température présente une dimension longitudinale d'environ 20 à 80 mm et/ou une dimension de largeur d'environ 3 à 20 mm et le dispositif de régulation de température (2) local est agencé à proximité spatiale d'au moins une zone de paroi (A) du canal d'écoulement de fonte de matière plastique (12) pour la section de profilé (11) à une paroi, en saillie,
**caractérisé en ce que**
un dispositif d'isolation thermique (70) est prévu pour au moins une zone partielle dans l'une plaque de buse (1) ou dans les plusieurs plaques de buse (1, 1A, 1B) pour des alimentations (9) d'un fluide de régulation de température, dans lequel le dispositif d'isolation (70) présente une fente à air (71) et/ou un matériau d'isolation.

2. Dispositif d'extrusion selon la revendication 1, **caractérisé en ce que** le dispositif de régulation de température (2) local est agencé à proximité spatiale d'au moins une zone de paroi (A) d'au moins un canal d'écoulement (3) pour la fonte de matière plastique, en particulier à proximité de l'ouverture de sortie d'une buse d'extrusion (60).

3. Dispositif d'extrusion selon la revendication 1 ou 2, **caractérisé en ce que** l'au moins une zone de paroi (A) à réguler en température est agencée entre 0 et 100 mm en amont de la sortie de la buse d'extrusion (60) et/ou que l'au moins une zone de paroi (A) à réguler en température est agencée dans la plaque de sortie de buse (1A) directement en amont de la sortie de la buse d'extrusion (60) et l'au moins une zone de paroi (A) présente une dimension dans le sens d'extrusion de 5 à 20 mm, de préférence de 6 à 10 mm, et une dimension transversale au sens d'extrusion d'environ 20 à 150 mm, de préférence sur la largeur entière de la surface de profilé associée.

4. Dispositif d'extrusion selon la revendication 4, **caractérisé en ce que** le dispositif de régulation de température local présente au moins un canal de régulation de température, au moins un moyen de chauffage électrique, en particulier un chauffage à induction ou à résistance et/ou au moins un élément thermoélectrique, dans lequel en particulier le au moins un canal de régulation de température peut être traversé par un fluide de régulation de température, en particulier de l'air ambiant, de l'air froid et/ou chauffé, un gaz et/ou un liquide, dans lequel l'écoulement avec un liquide est effectué en particulier dans un circuit fermé et l'écoulement avec un gaz est effectué dans un circuit ouvert.

5. Dispositif d'extrusion selon au moins l'une quelconque des revendications 4, **caractérisé en ce qu'**au moins un canal de régulation de température présente une étendue de largeur correspondant à la dimension de largeur de la zone de paroi (A) associée du canal d'écoulement de fonte de matière plastique (12) pour la section de profilé (11) à une paroi, en saillie, et/ou que la hauteur de fente d'au moins un canal de régulation de température est compris entre 0,3 et 5 mm, de préférence s'élève à 2 mm.

6. Dispositif d'extrusion selon au moins l'une quelconque des revendications précédentes, **caractérisé en ce que** le dispositif de régulation de température (2) local est isolé thermiquement par rapport à la buse d'extrusion (60), à savoir une plaque de buse (1) ou plusieurs plaques de buse (1, 1A, 1B) avec une fente à air (6) et/ou au moyen d'une couche intermédiaire thermoisolante de sorte que des différences de température supérieures soient actives au niveau de la surface du canal d'écoulement de fonte de matière plastique (12) pour la section de profilé (11) à une paroi, en saillie.

7. Dispositif d'extrusion selon au moins l'une quelconque des revendications précédentes, **caractérisé par** le couplage avec un dispositif de commande ou de régulation (50) pour la commande du dispositif de régulation de température (2) local pour influer sur une épaisseur de paroi du profilé en matière plastique (10), dans lequel au moins une grandeur de mesure est l'épaisseur de paroi, la largeur de fente dans un dispositif d'étalonnage (20), une extension spatiale du profilé de matière plastique (10) après la sortie de la buse d'extrusion (60) et/ou une contre-pression mesurée dans le dispositif d'étalonnage (20).

8. Dispositif d'extrusion selon au moins l'une quelconque des revendications précédentes, **caractérisé en ce que** la vitesse d'écoulement, la quantité de débit, la pression et/ou la température du fluide de régulation de température, en particulier de l'air, est réglable de manière ciblée avant l'entrée dans le dispositif de régulation de température (2).

9. Dispositif d'extrusion selon au moins l'une quelconque des revendications précédentes, **caractérisé par** un dispositif de commande ou de régulation (50) pour la modification temporelle de la température d'au moins une zone de paroi (A) du canal d'écoulement de fonte de matière plastique (12) pour la section de profilé (11) à une paroi, en saillie, en particulier pour le réglage d'une transition de température lente de manière contrôlée de 5 à 15 K/min.

10. Dispositif d'extrusion selon au moins l'une quelconque des revendications précédentes, **caractérisé par** un dispositif d'étranglement (30) pour le réglage ciblé du débit du fluide de régulation de température, dans lequel le dispositif d'étranglement (30) peut être couplé en particulier à un dispositif de commande ou de régulation.

11. Dispositif d'extrusion selon au moins l'une quelconque des revendications précédentes, **caractérisé en ce que** le profilé en matière plastique (10) présente des chambres creuses.

12. Procédé d'extrusion de profilés en matière plastique (10), avec au moins un canal d'écoulement de fonte de matière plastique (12), pour la section de profilé (11) à une paroi, en saillie, à savoir dans une plaque de buse (1) ou plusieurs plaques de buse (1, 1A, 1B), pour de la fonte de matière plastique, dans lequel la fonte de matière plastique peut être régulée en température dans au moins un canal d'écoulement de fonte de matière plastique (12) pour la section de profilé (11) à une paroi, en saillie pour le réglage de la vitesse d'écoulement au niveau d'au moins une zone de paroi (A) de canal d'écoulement de fonte pastique (12) pour la section de profilé (11) à une paroi, en saillie par un dispositif de régulation de température (2) local, dans lequel l'au moins une zone de paroi (A) à réguler en température présente une dimension longitudinale d'environ 20 à 80 mm et/ou une dimension de largeur d'environ 3 à 20 mm et le dispositif de régulation de température (2) local est agencé à proximité spatiale d'au moins une zone de paroi (A) du canal d'écoulement de fonte de matière plastique (12) pour la section de profilé (11) à une paroi, en saillie, et/ou pour au moins une zone partielle dans l'une plaque de buse (1) ou dans les plusieurs plaques de buse (1, 1A, 1B) des alimentations (9) pour un fluide de régulation de température sont prévues par un dispositif d'isolation (70) thermique, dans lequel le dispositif d'isolation (70) présente une fente à air (71) et/ou un matériau d'isolation.

13. Procédé d'extrusion selon la revendication 12, **caractérisé en ce que** l'au moins une zone de paroi (A) du canal d'écoulement de fonte de matière plastique (12) pour la section de profilé (11) à une paroi, en saillie et/ou du canal d'écoulement (3) est régulée en température jusqu'à 30 °C au-dessus ou en dessous de la température médiane d'une buse d'extrusion (60) et/ou qu'au moins un canal de régulation de température peut être traversé par un fluide de régulation de température, en particulier de l'air à température ambiante, de l'air refroidi et/ou chauffé, un gaz et/ou un liquide, dans lequel l'écoulement avec un liquide est effectué en particulier dans un circuit fermé et l'écoulement avec un gaz est effectué dans un circuit ouvert, dans lequel en particulier le fluide de régulation de température refroidi, en particulier du gaz, présente une température entre -50 et 30 °C, en particulier une température ambiante, dans lequel en particulier seule la zone de sortie de la buse d'extrusion (60) est régulée en température.

14. Dispositif d'extrusion selon la revendication 12 ou 13, **caractérisé par** une commande ou régulation de la commande du dispositif de régulation de température (2) local pour influer sur une épaisseur de paroi du profilé en matière plastique (10), dans lequel au moins une grandeur de mesure est l'épaisseur de paroi, la largeur de fente dans un dispositif d'étalonnage (20), une étendue spatiale du profilé en matière plastique (10) après la sortie de la buse d'extrusion (60) et/ou une contre-pression mesurée dans le dispositif d'étalonnage (20) et/ou que la vitesse d'écoulement, la quantité de débit, la pression et/ou la température du fluide de régulation de température, en particulier de l'air, est réglée de manière ciblée avant l'entrée dans le dispositif de régulation de température (2).

15. Procédé d'extrusion selon au moins l'une quelconque des revendications 12 à 14, **caractérisé en ce que** les profilés en matière plastique (10) présentent des chambres creuses.
